# EUROPÄISCHE PATENTSCHRIFT

(11) **EP 4 027 280 B1**
(45) Veröffentlichungstag und Bekanntmachung des Hinweises auf die Patenterteilung: **18.03.2026**
(21) Anmeldenummer: 21210971.4
(22) Anmeldetag: 29.11.2021
(51) Int. Cl.: G06Q 10/00

(54) **VERFAHREN ZUM VERARBEITEN VON KONFIGURATIONS-DATEN EINER VIELZAHL VON ENTITÄTEN, DAMIT ZUSAMMENWIRKENDE VERFAHREN UND VORRICHTUNGEN SOWIE COMPUTERPROGRAMMPRODUKT UND SIGNALFOLGE**
METHOD FOR PROCESSING CONFIGURATION DATA OF A PLURALITY OF ENTITIES, METHODS AND DEVICES INTERACTING WITH SAME, AND COMPUTER PROGRAM PRODUCT AND SIGNAL SEQUENCE
PROCÉDÉ DE TRAITEMENT DES DONNÉES DE CONFIGURATION D'UNE PLURALITÉ D'ENTITÉS, PROCÉDÉ ET DISPOSITIFS CORRESPONDANTS, AINSI QUE PRODUIT-PROGRAMME INFORMATIQUE ET SÉQUENCE DE SIGNAUX

(30) Priorität: 11.01.2021 DE 102021200191
(43) Veröffentlichungstag der Anmeldung: 13.07.2022
(73) Patentinhaber: GEZE GmbH, 71229 Leonberg (DE)
(72) Erfinder: Jauß, Dominik, 71229 Leonberg (DE)

(56) Entgegenhaltungen:
- US-A1- 2010 198 844
- US-B2- 9 470 947

## Beschreibung

### Bezeichnung der Erfindung

Verfahren zum Verarbeiten von Konfigurations-Daten einer Vielzahl von Entitäten, damit zusammenwirkende Verfahren und Vorrichtungen sowie Computerprogrammprodukt und Signalfolge

### Gebiet der Technik

Die vorliegende Erfindung betrifft ein Verfahren zum Verarbeiten von Konfigurations-Daten einer Vielzahl von Entitäten, ein Verfahren das damit zusammenwirken kann sowie Vorrichtungen, die dazu eingerichtet sind die Verfahren ausführen, ein Computerprogrammprodukt und eine Signalfolge.

### Stand der Technik

Automatische Anlagen, wie insbesondere automatische Tür- und Fensteranlagen, bieten regelmäßig eine Vielzahl von Parametern zum Einstellen ihrer Funktion. Es ist jedoch zeit- und kostenaufwändig eine solche Anlage neu zu konfigurieren, etwa wenn ihr Steuermodul ausgetauscht oder die Anlage durch ein anderes Modell ersetzt wird und sich dabei Einstellungen ändern.

US9470947B2 offenbart ein verteiltes Kontrollsystem für eine Mehrzahl von Fenstern inklusive elektrochromen Fenstern.

### Zusammenfassung der Erfindung

Es ist daher Aufgabe der vorliegenden Erfindung, die beschriebenen Nachteile des Stands der Technik zu überwinden und insbesondere Mittel bereitzustellen, mit denen der Betrieb einer automatischen Anlage während ihres gesamten Lebenszyklus kostengünstig und vor allem sicher und zuverlässig ermöglicht werden kann.

Die Aufgabe wird durch die Erfindung gemäß einem ersten Aspekt dadurch gelöst, dass ein Verfahren zum Verarbeiten von Konfigurations-Daten einer Vielzahl von Entitäten, wobei das Verfahren aufweist:
Bereitstellen wenigstens einer Datenbank, die aufweist: eine Mehrzahl von allgemeinen Konfigurations-Daten und eine Mehrzahl von allgemeinen Assoziierungs-Daten, wobei die einzelnen allgemeinen Assoziierungs-Daten jeweils Beziehungen zwischen zwei oder mehreren allgemeinen Konfigurations-Daten beschreiben und dadurch Gruppen von allgemeinen Assoziierungs-Daten unterschiedliche allgemeine Konfigurations-Profile mit jeweils zumindest paarweise in Beziehung stehenden allgemeinen Konfigurations-Daten definieren, wobei unterschiedliche allgemeine Konfigurations-Profile zumindest teilweise unterschiedliche allgemeine Konfigurations-Daten aufweisen;
Empfangen wenigstens eines Identifizierers, der wenigstens ein ausgezeichnetes Konfigurations-Profil identifizierbar macht;
Verarbeiten wenigstens von Konfigurations-Daten und/oder Assoziierungs-Daten im Zusammenhang mit dem ausgezeichneten Konfigurations-Profil sowie erzeugen eines Kontrollsignals basierend auf wenigstens einem Ergebnis der Verarbeitung; wobei das Verarbeiten der Konfigurations- bzw. Assoziierungs-Daten aufweist, dass spezifische Konfigurations-Daten einer spezifischen Entität empfangen werden und zusammen mit spezifischen Assoziierungs-Daten in der Datenbank gespeichert werden, wobei die einzelnen spezifischen Assoziierungs-Daten jeweils Beziehungen zwischen einem oder mehreren allgemeinen Konfigurations-Daten des ausgezeichneten Konfigurations-Profils und/oder einem oder mehreren der empfangenen spezifischen Konfigurations-Daten beschreiben und dadurch ein spezifisches Konfigurations-Profil, das wenigstens das ausgezeichnete Konfigurations-Profil und die mit einem oder mehreren von diesem aufgewiesenen allgemeinen Konfigurations-Daten in Beziehung stehenden empfangenen spezifischen Konfigurations-Daten aufweist, definieren;
wobei das Kontrollsignal wenigstens einem Empfänger bereitgestellt wird, nämlich an diesen gesendet wird;
wobei die Entitäten automatische Türanlagen, automatische Toranlagen, automatische Fensteranlagen und/oder automatische Lichtanlagen aufweisen und/oder darstellen, vorgeschlagen wird.

Der Erfindung liegt damit die überraschende Erkenntnis zugrunde, dass eine gemeinsame Basis von allgemeinen Konfigurations-Daten eine besonders einfache und zuverlässige Konfiguration und ReKonfiguration von Entitäten, wie automatische Tür- und Fensteranlagen, unterschiedlichen Typs, Modells, etc. ermöglicht.

So können für unterschiedliche Anforderungen unterschiedliche allgemeine Konfigurations-Profile basierend auf den gemeinsamen allgemeine Konfigurations-Daten erstellt werden, indem aus den allgemeinen Konfigurations-Daten mittels allgemeiner Assoziierungs-Daten die für das jeweilige Konfigurations-Profil relevanten allgemeinen Konfigurations-Daten miteinander in Beziehung gebracht werden. Somit müssen die von unterschiedlichen allgemeinen Konfigurations-Profilen gleichermaßen aufgewiesenen allgemeinen Konfigurations-Daten nur einmal in der Datenbank eingepflegt und vorgehalten werden.

Dadurch werden Redundanzen von allgemeinen Konfigurations-Daten vermieden. Durch die reduzierte Datenmenge kann das Verfahren sehr effizient durchgeführt werden. Damit können auch für eine große Anzahl von Entitäts-Typen zugehörige allgemeine Konfigurations-Daten verwaltet und/oder bereitgestellt werden.

Beispielsweise können mit dem Verfahren mehr als 2, mehr als 5, mehr als 10, mehr als 30, mehr als 50, mehr als 100, mehr als 300, mehr als 500, mehr als 1.000 oder sogar mehr als 3.000 allgemeine Konfigurations-Profile verwaltet und/oder bereitgestellt werden.

Da verschiedene allgemeine Konfigurations-Profile auf der gleichen Sammlung von allgemeinen Konfigurations-Daten basieren, lassen sich außerdem Gemeinsamkeiten und Unterschiede zwischen unterschiedlichen allgemeinen Konfigurations-Profilen einfach und zuverlässig erkennen. Wird für eine Entität ein neues allgemeines Konfigurations-Profil ausgewählt, etwa beim Aktualisieren des Steuermoduls einer Entität auf eine neue Version, oder beim Wechsel des Modells der Entität, können so die zwischen den beiden allgemeinen Konfigurations-Profilen unterschiedlichen Konfigurations-Daten behandelt werden, während die übrigen Konfigurations-Daten unverändert übernommen werden können. Damit entfällt die Notwendigkeit, Korrespondenz-Listen für die Konfigurations-Daten von jeweils Paare von unterschiedlichen allgemeinen Konfigurations-Profilen zu erstellen. Eine komplizierte und fehleranfällige Übertragung von Konfigurations-Daten ist damit ebenfalls obsolet.

Somit können bei einem Wechsel des allgemeinen Konfigurations-Profils, etwa bei einem Aktualisieren der Steuereinheit einer Entität auf eine neue Version, oder bei einem Wechsel des Modells der Entität, alle weiterhin relevanten Konfigurations-Daten unverändert bleiben, und es müssen nur die zwischen den beiden allgemeinen Konfigurations-Profilen unterschiedlichen Konfigurations-Daten behandelt werden.

Dies macht einen Konfigurations-Vorgang nicht nur schneller und damit effizienter, sondern verhindert auch zuverlässig Fehlkonfigurationen und die damit verbundene Notwendigkeit der Störungsbehebung. Somit kann ein sicherer und zuverlässiger Betrieb der Entität ermöglicht werden.

Die Konfigurations-Daten eines jeden Konfigurations-Profils können dabei mittels der Assoziierungs-Daten und/oder der Zuordnung der Konfigurations-Daten zu unterschiedlichen Gruppen hierarchisch und ihrer Funktion nach gegliedert und zueinander relativiert werden. Damit kann ein Konfigurations-Profil beispielsweise als Baumstruktur darstellbar sein. Dies kann gerade auch für ein allgemeines Konfigurations-Profil der Fall sein.

Beispielsweise kann jedes Konfigurations-Profil ein in seiner Hierarchieordnung oberstes Element, ein so genanntes Wurzel-Element, aufweisen. Von diesem ausgehend sind alle anderen von dem jeweiligen Konfigurations-Profil aufgewiesenen Konfigurations-Daten in der Datenbank ermittelbar. Es ist dann besonders einfach möglich, ein Konfigurations-Profil, wie ein allgemeines Konfigurations-Profil, für eine Entität auszuwählen, indem das Konfigurations-Profil über ein vorgegebenes oder vorgebbares Wurzel-Element ausgewählt wird.

In einer Ausführungsform lassen sich die allgemeinen Konfigurations-Daten eines jeden allgemeinen Konfigurations-Profils jeweils durch wenigstens ein von dem betreffenden allgemeinen Konfigurations-Profil aufgewiesenes allgemeines Konfigurations-Datum, insbesondere eines Wurzel-Elements, auffinden.

Allgemeine Konfigurations-Daten können beispielsweise Parameter, mit denen eine Entität konfiguriert werden kann, zulässige Werte oder Wertebereiche, aus denen Werte für die Einstellung von solchen Parametern gewählt werden können, Standard-Werte für solche Parameter und/oder Fehler- und Hinweismeldungen, die bei der Konfiguration von solchen Parametern auftreten können, aufweisen.

In einer Ausführungsform sind in der Datenbank mehrere allgemeine Konfigurations-Profile definiert, vorzugsweise mehr als 2, mehr als 5, mehr als 10, mehr als 30, mehr als 50, mehr als 100, mehr als 300, mehr als 500, mehr als 1.000 oder mehr als 3.000, oder können definiert werden. In einer Ausführungsform ist ein Identifizierer ein allgemeines Konfigurations-Datum.

In einer Ausführungsform weisen die allgemeinen Konfigurations-Daten Daten aus zwei oder mehr allgemeinen Gruppen auf. In einer Ausführungsform weisen jeweils zwei der mehreren in der Datenbank definierten allgemeinen Konfigurations-Profile zumindest zum Teil unterschiedliche allgemeine Konfigurations-Daten auf.

Ein allgemeines Konfigurations-Profil kann somit alle für einen bestimmten Entitäts-Typ relevanten Einstellungsmöglichkeiten bereitstellen. Beispielsweise kann dann anhand des allgemeinen Konfigurations-Profils eine Eingabemaske erstellt werden, über die die für die relevanten Einstellungsmöglichkeiten notwendigen Daten abgefragt werden können. Anschließend kann darauf basierend die Konfiguration der Entität vorgenommen werden.

Das ausgezeichnete Konfigurations-Profil kann beispielsweise jedes in der Datenbank gespeicherte bzw. darin definierte Konfigurations-Profil darstellen.

Das Kontrollsignal erlaubt es, Informationen in Bezug auf die in der Datenbank bestehende Datenlage bereitzustellen. Das Kontrollsignal kann wirkungsvoll dazu eingesetzt werden, auf andere technische Systeme einzuwirken. Damit ermöglicht es das vorgeschlagene Verfahren, dass in Abhängigkeit bestimmter Datenlagen ein technisches System beeinflusst wird. Dadurch kann das Verfahren nahtlos in eine bestehende Infrastruktur eingebunden werden. Dies macht es besonders universell einsetzbar.

In einer Ausführungsform wird das Kontrollsignal einem Empfänger bereitgestellt, insbesondere an diesen gesendet. Der Empfänger des Kontrollsignals kann dabei die gleiche Instanz sein, die auch das Verfahren ausführt, und/oder eine davon unterschiedliche.

In einer Ausführungsform weist das Kontrollsignal ein analoges Signal und/oder ein Digitalsignal auf.

Das Kontrollsignal ist also vorzugsweise dergestalt, dass damit Daten und somit Informationen an andere Beteiligte, wie beispielsweise andere Module, mitgeteilt und/oder über das Internet übertragen werden können.

In einer Ausführungsform steht jedes allgemeine Konfigurations-Datum mit wenigstens einem anderen Konfigurations-Datum in Beziehung.

In einer Ausführungsform kann für jedes Assoziierungs-Datum, insbesondere allgemeines Assoziierungs-Datum, der Typ der durch dieses beschriebene Beziehung zwischen den Konfigurations-Daten ausgewählt werden aus der Gruppe von Beziehungen aufweisend: 1:1-, 1:N- und M:N-Beziehung. Das heißt auch, dass vorzugsweise unterschiedliche Assoziierungs-Daten unterschiedliche Beziehungs-Typen beschreiben können.

Eine Beziehung oder Assoziierung zwischen zwei oder mehr Daten kann bedeuten, dass das eine Datum anhand des anderen Datums in der Datenbank auffindbar ist.

Vorzugsweise sind die beteiligten Entitäten dabei alle vom gleichen Typ (beispielsweise alle in Form von automatischen Türanlagen) oder die beteiligten Entitäten sind alle oder zum Teil von einem unterschiedlichen Typ.

In einer Ausführungsform weist eine automatische Türanlage eine automatische Schiebetüre, eine automatische Drehtüre und/oder eine automatische Karusselltüre auf oder stellt diese dar.

In einer Ausführungsform weist eine automatische Lichtanlage eine automatische Oberlichtanlage auf oder stellt diese dar.

In einer Ausführungsform ist das Verfahren computer-implementiert.

In einer Ausführungsform wird das Verfahren von wenigstens einem Server und/oder von einem Cloud-System ausgeführt. Das Verfahren kann alternativ oder ergänzend durch ein eingebettetes System und/oder durch ein Betriebssystem ausgeführt werden.

Das vorgeschlagene Verfahren ermöglicht es daher, unterschiedliche Einstellungen verwalten zu können. Diese können beispielsweise Einstellungen betreffen, die sich über Produktmodelle, - Varianten, -Versionen hinweg unterscheiden. Dabei können Parameter, welche jeweils gesetzt werden können oder dürfen, Standard-Werte und zulässige Werte bzw. Wertebereiche dieser Parameter und mögliche Fehler- und Hinweismeldungen sowie auch für die Parameter gesetzte Werte von den Einstellungen erfasst sein. Außerdem können auch Kompatibilitätsinformationen zu Firmwareständen geführt werden.

Alle diese Produktvarianteneigenschaften der möglichen Entitäts-Typen können damit zentral in einer "Asset-Varient"-Datenbank gepflegt und vorgehalten werden. Dadurch können die über die Entitäten hinweg unterschiedlichen Einstellungen einheitlich beschrieben, implementiert und nachgehalten werden. Das macht die automatische Verarbeitung der Informationen sehr einfach und effizient möglich. Beispielsweise kann so ein Vergleich von Einstellungen (z.B. Parameter und Werte), deren Übertrag zwischen unterschiedlichen Produkten und Varianten von Entitäten und deren Übertrag zwischen gleichen Entitäten unterschiedlicher Version ermöglicht werden. Außerdem lassen sich Fehler einheitlich beschreiben.

Diese Informationen können Empfängern bereitgestellt werden, sei es der zu konfigurierende Entität selbst, oder einem Client, wie einem Smartphone, der die Entität konfiguriert. Die genaue Entität und damit das relevante Konfigurations-Profil kann anhand definierter oder definierbarer Merkmale der Anlagensteuerung der Entität identifiziert und damit als Identifizierer bereitgestellt werden.

Ein lokales Abbild des jeweiligen Konfigurations-Profils kann auch in einem lokalen Cache des Empfängers vorgehalten werden. So kann auch bei fehlender Verbindung zu einem Backend ein möglichst aktueller Stand gewährleistet werden. Bei Änderungen oder neuen Einträgen kann der lokale Stand dann aktualisiert werden, insbesondere sobald wieder eine Verbindung hergestellt werden kann.

Es entfällt damit die Notwendigkeit, dass diese Informationen lokal in den Anwendersystemen vorgehalten oder von einer Anlagensteuerung gestellt werden müssen. Somit können stets die aktuellsten und zutreffenden Einstellungsmöglichkeiten für eine Entität bereitgestellt werden. Dies ist nützlich, wenn etwa eine neue Steuerungssoftware eingeführt wird. Denn dabei können häufig teilweise neue Daten beschrieben werden. Beispielsweise können neue Parameter gesetzt werden oder andere Werte bzw. Wertebereiche sind zulässig. Indem immer die aktuellen Konfigurations-Daten bereitgestellt werden können, wird ein zuverlässiger und sicherer Betrieb der Entitäten ermöglicht.

Es besteht auch kein aktiver Aufwand mehr für die Aktualisierung einer Service-Software. Die Konfigurations-Profile liefern alle aktuellen Informationen mit. Auch neue Typen von Entitäten können leicht mit Konfigurations-Profilen versorgt werden. Die zentrale Pflege der Daten ist einfach möglich und erlaubt eine hochwertige Datenbasis mit einem "single point of truth", was die Qualität fördert.

Das vorgeschlagene Verfahren eignet sich daher besonders gut für den Einsatz im Zusammenhang mit Entitäten in Form von automatischen Türanlagen, beispielsweise Karusselltüren, Drehtüren und/oder Schiebetüren, automatischen Toranlagen, automatischen Fensteranlagen und/oder automatischen Lichtanlagen.

In einer bevorzugten Ausführungsform kann vorgesehen sein, dass (i) das Verarbeiten der Daten nach einem Auswerten eines Steuersignals und einem Feststellen eines ersten Wertes des Steuersignals erfolgt und/oder mittels eines ersten Moduls erfolgt das, vorzugsweise auf das Feststellen des ersten Wertes des Steuersignals hin, ausgewählt und/oder ausgeführt wird, und/oder (ii) das Kontrollsignal einen Zustand des Ergebnisses der Datenverarbeitung aufweist.

Es zeigt sich, dass besonders einfach entitäts-spezifische Konfigurations-Profile angelegt und verarbeitet werden können, indem allgemeine Konfigurations-Profile mit spezifischen Konfigurations-Daten in Beziehung gebracht werden.

Dazu genügt es, dass spezifische Konfigurations-Daten einer spezifischen Entität verfügbar sind, etwa empfangen werden, und diese mittels spezifischer Assoziierungs-Daten mit allgemeinen Konfigurations-Daten eines aufgezeichneten Konfigurations-Profils in Beziehung gebracht werden. Dadurch können alle oder einige allgemeine Konfigurations-Daten des ausgezeichneten Konfigurations-Profils mit solchen für eine spezifische Entität gültigen spezifischen Konfigurations-Daten assoziiert werden.

Beispielsweise kann vorliegend das ausgezeichnete Konfigurations-Profil ein allgemeines oder spezifisches Konfigurations-Profil darstellen.

Dann kann ein allgemeines Konfigurations-Profil, das für mehrere Entitäten etwa des gleichen Typs verwendet werden kann, mit spezifischen Konfigurations-Daten einer spezifischen Entität dieses Typs assoziiert werden und dadurch ein spezifisches Konfigurations-Profil erhalten werden, das nur für die spezifische Entität gilt.

So kann etwa ein durch ein allgemeines Konfigurations-Datum repräsentierter Parameter (beispielsweise die "Drehgeschwindigkeit" einer Karusselltür) für eine spezifische Entität mit einem durch ein spezifisches Konfigurations-Datum repräsentierter Wert (beispielsweise "5 U/Min") belegt werden. Andere spezifische Entitäten können dieses allgemeine Konfigurations-Datum mit einem dann für sie individuell und ggf. abweichend gewählten Wert mittels entsprechender spezifischer Konfigurations-Daten belegen. Dadurch können mehrere spezifische Konfigurations-Profile angelegt werden, die auch alle das gleiche allgemeine Konfigurations-Profil verwenden können.

Dadurch ist es mit dem vorgeschlagenen Verfahren besonders einfach und effizient möglich, auch die individuellen Einstellungs-Werte einer jeden Entität zentral vorzuhalten. Dennoch ist die zusätzliche Datenmenge gering, da ein spezifisches Konfigurations-Profil lediglich die spezifischen Konfigurations-Daten und die notwendigen spezifischen Assoziierungs-Daten zusätzlich aufweist. So können die allgemeinen Konfigurations-Daten mehrfach genutzt werden, nämlich in verschiedenen allgemeinen Konfigurations-Profilen und in verschiedenen spezifischen Konfigurations-Profilen, die jeweils teilweise auf gleichen allgemeinen Konfigurations-Profilen basieren.

Ein spezifisches Konfigurations-Profil kann somit alle für eine bestimmte, spezifische, Entität relevanten Einstellungsmöglichkeiten und Einstellungs-Werte bereitstellen. Darauf basierend kann die Konfiguration der spezifischen Entität ganz oder teilweise vorgenommen werden. Dazu ist optional keine Benutzereingabe oder sonstige Interaktion notwendig. Somit kann die Konfiguration auch automatisch durchgeführt werden.

Das Verfahren erlaubt es dadurch etwa, dass einer Entität eine vollständige Konfiguration bereitgestellt werden kann. Dies ist beispielsweise sehr nützlich, um eine Wiederherstellung von Konfigurations-Daten nach einem Datenverlust oder Austausch eines Steuermoduls zu ermöglichen.

In einer Ausführungsform sind in der Datenbank mehrere spezifische Konfigurations-Profile definiert, vorzugsweise mehr als 2, mehr als 5, mehr als 10, mehr als 30, mehr als 50, mehr als 100, mehr als 300, mehr als 500, mehr als 1.000 oder mehr als 3.000, oder können definiert werden. In einer Ausführungsform ist ein Identifizierer ein spezifisches Konfigurations-Datum.

In einer Ausführungsform lassen sich die Konfigurations-Daten eines jeden spezifischen Konfigurations-Profils jeweils durch wenigstens ein von dem betreffenden spezifischen Konfigurations-Profil aufgewiesenes Konfigurations-Datum, insbesondere eines Wurzel-Elements, auffinden.

Ein spezifisches Konfigurations-Profil kann spezifische Konfigurations-Daten, spezifische Assoziierungs-Daten und die von mit ihm in Beziehung stehenden allgemeinen Konfigurations-Profil aufgewiesenen Daten aufweisen.

In einer Ausführungsform weist das Verfahren auf, dass das Steuersignal empfangen und/oder ausgewertet wird. Abhängig von dessen Wert können dann weitere Maßnahmen erfolgen.

Mit Hilfe des Steuersignals kann dabei gezielt kontrolliert und gesteuert werden, wann welche Datenverarbeitung erfolgt. Dies ist eine besonders effiziente Möglichkeit, um das Verfahren auch von außerhalb beeinflussbar zu gestalten. Dadurch kann das vorgeschlagene Verfahren besonders einfach auch in bestehende Systeme eingebunden werden. Dadurch ist das vorgeschlagene Verfahren universell einsetzbar.

In einer Ausführungsform weist das Steuersignal ein analoges Signal, ein Digitalsignal, ein Ergebnis einer Auswahlentscheidung, ein Ergebnis einer Auswertung eines mit unterschiedlichen Werten belegbaren Flags und/oder ein Ergebnis einer Auswertung eines mit unterschiedlichen Werten belegbaren Datums auf.

Beispielsweise kann in einer Ausführungsform das Steuersignal durch einen bestimmten Wert einen erkannten Datenverlust signalisieren und daraufhin ein Bereitstellen spezifischer Konfigurations-Profile ausgelöst werden.

In einer Ausführungsform ist jedes spezifische Konfigurations-Datum einer spezifischen Entität mit wenigstens einem allgemeinen Konfigurations-Datum assoziiert. Optional sind wenigstens einige dieser spezifischen Konfigurations-Daten mit einem gleichen spezifischen Konfigurations-Datum der spezifischen Entität assoziiert.

In einer Ausführungsform ist wenigstens eines der spezifischen Konfigurations-Daten einer spezifischen Entität mit allen übrigen spezifischen Konfigurations-Daten der spezifischen Entität assoziiert. Dadurch sind alle zu einer spezifischen Entität gehörigen spezifischen Konfigurations-Daten darüber auffindbar. Optional ist dieses eine spezifische Konfigurations-Datum auch mit wenigstens einem allgemeinen Konfigurations-Daten assoziiert.

Dadurch sind über ein spezifisches Konfigurations-Datum sowohl ein allgemeines Konfigurations-Profil als auch die spezifischen Konfigurations-Daten einer spezifischen Entität auffindbar und damit insgesamt ein spezifisches Konfigurations-Profil auffindbar.

In einer Ausführungsform sind in der Datenbank mehrere spezifische Konfigurations-Profile definiert. In einer Ausführungsform weist die Datenbank ferner eine Mehrzahl von spezifischen Konfigurations-Daten auf. In einer Ausführungsform ist ein Identifizierer ein spezifisches Konfigurations-Datum.

Wenn ein Identifizierer ein spezifisches Konfigurations-Profil identifizierbar macht, kann darüber auch ein allgemeines Konfigurations-Profil identifizierbar sein.

Durch einen modularen Aufbau kann für verschiedene Werte des Steuersignals jeweils eine maßgeschneiderte und damit zielgerichtete Maßnahme zum Einsatz kommen. Insbesondere zeigt sich, dass es der modulare Aufbau besonders gut ermöglicht, das Verfahren flexibel erweitern oder reduzieren zu können. So können neue Maßnahmen besonders einfach vorgesehen werden, indem einfach ein entsprechendes Modul in das Verfahren mit eingebunden wird, das beispielsweise auf einen entsprechenden Wert des Steuersignals hin ausgewählt bzw. ausgeführt werden kann. Auch eine besonders feingranulare Unterscheidung zwischen einzelnen Maßnahmen ist damit sehr einfach und effizient realisierbar.

Außerdem ist gerade bei der elektronischen Datenverarbeitung, insbesondere also, wenn das Verfahren computerimplementiert realisiert wird, eine besonders hohe Effizienz möglich, da Ressourcen des verarbeitenden Systems nur sparsam beansprucht werden. Denn es müssen in diesem Fall nicht gleich zu Beginn alle überhaupt denkbaren Module geladen und im Speicher vorgehalten werden. Stattdessen müssen erst dann Systemressourcen für ein Modul reserviert und beansprucht werden, wenn und soweit ein Modul, etwa aufgrund eines entsprechenden Wertes des Steuersignals, ausgewählt wird und zum Einsatz kommt.

Ein "Modul" im Sinne der vorliegenden Erfindung kann beispielsweise in Software, in Hardware oder einer Kombination von beidem realisiert sein. Ein "Modul" im Sinne der vorliegenden Erfindung kann alternativ oder ergänzend einen Speicher, einen Prozessor, eine Empfangseinrichtung, eine Sendeeinrichtung oder eine beliebige Kombination davon aufweisen. Ein "Modul" im Sinne der vorliegenden Erfindung kann alternativ oder ergänzend alles, was von ihm aufgewiesen ist, wie insbesondere alle dafür notwendigen Ressourcen, beispielsweise in Form von Software- und/oder Hardwareressourcen, für das Verfahren bereitstellen und/oder verfügbar machen und/oder aufweisen. Ein "Modul" im Sinne der vorliegenden Erfindung kann alternativ oder ergänzend eine rein logische oder tatsächliche Gruppierung von Anweisungen innerhalb eines Programms oder eines Verfahrensablaufs darstellen und/oder aufweisen. Ein "Modul" im Sinne der vorliegenden Erfindung kann alternativ oder ergänzend eine Klasse, eine Funktion, eine Datei und/oder eine Programm-Bibliothek sein und/oder aufweisen, die auswählbar, aufrufbar, ausführbar, in einen Speicher ladbar und/oder in einem Speicher dauerhaft oder vorübergehend vorhaltbar ist.

Es ist dabei bevorzugt, dass jedes verfügbare Modul eigenständig ausgebildet ist. Aber in anderen bevorzugten Ausführungsformen können auch zwei oder mehr Module innerhalb eines gemeinsamen Moduls ausgebildet oder von diesem aufgewiesen sein.

In einer Ausführungsform wird das erste Modul zu wenigstens einem ersten Zeitpunkt ausgewählt bzw. ausgeführt. Das heißt, zu dem ersten Zeitpunkt werden die Konfigurations-Daten empfangen und in der Datenbank gespeichert.

In einer Ausführungsform werden zu verschiedenen Zeitpunkten verschiedene Werte des Steuersignals festgestellt. Optional werden dabei jeweils zumindest teilweise unterschiedliche Identifizierer empfangen. Diese können zumindest teilweise unterschiedliche Konfigurations-Profile identifizierbar machen.

In einer bevorzugten Ausführungsform kann vorgesehen sein, dass durch die allgemeinen Assoziierungs-Daten
(i) jedes erste allgemeine Konfigurations-Datum einer ersten allgemeinen Gruppe mit wenigstens einem, vorzugsweise mit mehreren, zweiten allgemeinen Konfigurations-Datum einer zweiten allgemeinen Gruppe in Beziehung gebracht wird,
   und/oder
(ii) jedes zweite allgemeine Konfigurations-Datum der zweiten allgemeinen Gruppe mit wenigstens einem, vorzugsweise mit mehreren, dritten allgemeinen Konfigurations-Datum einer dritten allgemeinen Gruppe in Beziehung gebracht wird,

vorzugsweise jedes zweite allgemeine Konfigurations-Datum der zweiten allgemeinen Gruppe mit mehreren dritten allgemeinen Konfigurations-Daten von mehreren dritten allgemeinen Gruppen in Beziehung gebracht wird,
insbesondere jedes zweite allgemeine Konfigurations-Datum der zweiten allgemeinen Gruppe mit wenigstens einem, vorzugsweise mit mehreren, ersten dritten allgemeinen Konfigurations-Datum einer ersten dritten allgemeinen Gruppe, mit wenigstens einem, vorzugsweise mit mehreren, zweiten dritten allgemeinen Konfigurations-Datum einer zweiten dritten allgemeinen Gruppe und/oder mit wenigstens einem, vorzugsweise mit mehreren, dritten dritten allgemeinen Konfigurations-Datum einer dritten dritten allgemeinen Gruppe in Beziehung gebracht wird,
und/oder
durch die spezifischen Assoziierungs-Daten

(i) jedes erste spezifische Konfigurations-Datum einer ersten spezifischen Gruppe mit wenigstens einem, vorzugsweise mit genau einem oder mit mehreren, ersten allgemeinen Konfigurations-Datum der ersten allgemeinen Gruppe in Beziehung gebracht wird,
   und/oder
(ii) jedes zweite spezifische Konfigurations-Datum einer zweiten spezifischen Gruppe mit wenigstens einem, vorzugsweise mit genau einem oder mit mehreren, zweiten allgemeinen Konfigurations-Datum der zweiten allgemeinen Gruppe, mit wenigstens einem, vorzugsweise mit genau einem oder mit mehreren, ersten spezifischen Konfigurations-Datum der ersten spezifischen Gruppe und/oder mit wenigstens einem, vorzugsweise mit genau einem oder mit mehreren, dritten, insbesondere ersten dritten, allgemeinen Konfigurations-Datum der dritten allgemeinen Gruppe in Beziehung gebracht wird.

Es ist besonders effizient, wenn die Konfigurations-Daten unterschiedlichen Gruppen angehören. Dies ermöglicht es besonders einfach, eine hierarchische Struktur der von einem allgemeinen oder spezifischen Konfigurations-Profil aufgewiesenen Daten definieren und ihre Abhängigkeiten darstellen zu können. Dabei können in jeder hierarchischen Struktur allgemeine Konfigurations-Daten, spezifische Konfigurations-Daten oder eine Kombination aus beidem vorgesehen sein.

In einer Ausführungsform sind die allgemeinen Konfigurations-Daten in zwei oder mehr allgemeine Gruppen eingeteilt oder einteilbar. In einer Ausführungsform sind die spezifischen Konfigurations-Daten in zwei oder mehr spezifische Gruppen eingeteilt oder einteilbar.

In einer Ausführungsform beschreiben die einzelnen allgemeinen Assoziierungs-Daten jeweils Beziehungen zwischen zwei oder mehreren allgemeinen Konfigurations-Daten wenigstens zweier Gruppen.

In einer Ausführungsform beschreiben die einzelnen spezifischen Assoziierungs-Daten jeweils Beziehungen zwischen wenigstens zwei spezifischen Konfigurations-Daten und/oder zwischen wenigstens einem allgemeinen Konfigurations-Datum und wenigstens einem spezifischen Konfigurations-Datum.

In einer Ausführungsform werden die für die allgemeinen Konfigurations-Profile zur Verfügung stehenden Entitäts-Typen jeweils als erstes allgemeines Konfigurations-Datum in der Datenbank eingruppiert. Beispielsweise kann es unterschiedliche Typen, wie Modelle, Varianten, Versionen, etc., von Entitäten geben. Beispielsweise ist eine Entität vom Modell A in Variante X und Version 1 ein Typ und eine Entität vom Modell A in Variante X und Version 2 ein anderer Typ.

In einer Ausführungsform werden die für die allgemeinen Konfigurations-Profile zur Verfügung stehenden Parameter jeweils als zweites allgemeines Konfigurations-Datum in der Datenbank eingruppiert. Beispielsweise kann es unterschiedliche Parameter, wie Drehgeschwindigkeit, Fahrgeschwindigkeit, etc., Entitäten geben.

In einer Ausführungsform werden die für die allgemeinen Konfigurations-Profile, bzw. deren Parameter, zur Verfügung stehenden zulässigen Werte oder Wertebereiche jeweils als erstes drittes allgemeines Konfigurations-Datum in der Datenbank eingruppiert.

In einer Ausführungsform werden die für die allgemeinen Konfigurations-Profile, bzw. deren Parameter, zur Verfügung stehenden Standard-Werte jeweils als zweites drittes allgemeines Konfigurations-Datum in der Datenbank eingruppiert.

In einer Ausführungsform werden die für die allgemeinen Konfigurations-Profile zur Verfügung stehenden Fehler- und Hinweismeldungen jeweils als drittes drittes allgemeines Konfigurations-Datum in der Datenbank eingruppiert.

In einer Ausführungsform werden Identifizierer der spezifischen Entitäten jeweils als erstes spezifisches Konfigurations-Datum in der Datenbank eingruppiert. Jeder Identifizierer kann dann dazu dienen, ein ausgezeichnetes Konfigurations-Profil, insbesondere in Form eines spezifischen oder allgemeinen Konfigurations-Profils, auszuwählen.

In einer Ausführungsform werden die Werte, die für eine spezifische Entität für einzelne allgemeine Konfigurations-Daten, insbesondere zweite allgemeine Konfigurations-Daten, gewählt werden, jeweils als zweites spezifisches Konfigurations-Datum in der Datenbank eingruppiert.

Indem in einer Ausführungsform eine Beziehung zwischen einem ersten allgemeinen und wenigstens einem zweiten allgemeinen Konfigurations-Datum hergestellt wird, kann einem bestimmten Entitäts-Typ bestimmte Parameter, die für diesen Typ innerhalb eines allgemeinen Konfigurations-Profils konfiguriert werden können, zugeordnet werden.

Indem in einer Ausführungsform eine Beziehung zwischen einem zweiten allgemeinen und wenigstens einem ersten dritten allgemeinen Konfigurations-Datum hergestellt wird, kann einem bestimmten Parameter ein bestimmter zulässiger Wert oder Wertebereiche, aus dem Werte für diesen Parameter innerhalb eines allgemeinen Konfigurations-Profils eingestellt werden können, zugeordnet werden.

Indem in einer Ausführungsform eine Beziehung zwischen einem zweiten allgemeinen und wenigstens einem zweiten dritten allgemeinen Konfigurations-Datum hergestellt wird, kann einem bestimmten Parameter ein bestimmter Standard-Wert, der für diesen Parameter innerhalb eines allgemeinen Konfigurations-Profils vorgegeben wird, zugeordnet werden.

Indem in einer Ausführungsform eine Beziehung zwischen einem zweiten allgemeinen und wenigstens einem dritten dritten allgemeinen Konfigurations-Datum hergestellt wird, kann einem bestimmten Parameter eine Fehlermeldung, die für diesen Parameter innerhalb eines allgemeinen Konfigurations-Profils ausgegeben werden kann, zugeordnet werden.

Indem in einer Ausführungsform eine Beziehung zwischen einem ersten spezifischen und wenigstens einem ersten allgemeinen Konfigurations-Datum hergestellt wird, kann einer spezifischen Entität innerhalb eines spezifischen Konfigurations-Profils ein bestimmter Typ zugeordnet werden. Dieses erste allgemeinen Konfigurations-Datum kann ein Wurzel-Element innerhalb eines allgemeinen Konfigurations-Profils darstellen. Damit kann das spezifische Konfigurations-Profil leicht definiert werden. Über das erste spezifische Konfigurations-Datum können alle weiteren allgemeinen und spezifischen Konfigurations-Daten des spezifischen Konfigurations-Profils ermittelt werden.

Indem in einer Ausführungsform eine Beziehung zwischen einem zweiten spezifischen und einem zweiten allgemeinen Konfigurations-Datum und dem ersten spezifischen Konfigurations-Datum hergestellt wird, kann einem bestimmten Parameter (definiert über ein zweites allgemeines Konfigurations-Datum), der der spezifischen Entität (definiert über das erste spezifische Konfigurations-Datum) zum Konfigurieren zur Verfügung steht, ein bestimmter Wert (definiert über das zweite spezifische Konfigurations-Datum) innerhalb eines spezifischen Konfigurations-Profils zugeordnet werden. Dadurch ist es möglich, vielen verschiedenen spezifischen Entitäten einem bestimmten gleichen Parameter jeweils eigene Werte zuzuweisen.

Indem beispielsweise ein zweites spezifische Konfigurations-Datum mit einem dritten allgemeinen Konfigurations-Datum in Beziehung gebracht wird, kann einer spezifischen Entität beispielsweise ein abweichender, etwa ein kleinerer oder größerer, Wertebereich zugeordnet werden, als es durch ein entsprechendes, ausgezeichnetes allgemeines Konfigurations-Profil vorgesehen ist.

In einer Ausführungsform kann alternativ oder ergänzend vorgesehen sein, dass vierte allgemeine Konfigurations-Daten vorgesehen werden, und insbesondere jedes vierte allgemeine Konfigurations-Datum mit wenigstens einem, vorzugsweise mit mehreren, ersten allgemeinen Konfigurations-Daten in Beziehung gebracht wird. Damit können zusätzliche Merkmale, welche beispielsweise separat von den zweiten allgemeinen Konfigurations-Daten verwaltet werden, mit den Daten der ersten allgemeinen Gruppe in Beziehung gebracht werden. Dies erleichtert eine effiziente Datenverwaltung. Beispielsweise können vierte allgemeine Konfigurations-Daten Fehlermeldungen aufweisen oder darstellen, welche für jeden Typ von Entität gleich sind. Die weitere Kategorie von Daten kann damit Speicherressourcen sparen.

In einer Ausführungsform können Werte, wie beispielsweise "aktiv" und/oder "inaktiv", in Beziehung zu dritten dritten allgemeinen Konfigurations-Daten und/oder vierten allgemeinen Konfigurations-Daten gebracht werden.

In einer bevorzugten Ausführungsform kann vorgesehen sein, dass das Verarbeiten der Konfigurations- bzw. Assoziierungs-Daten aufweist, dass die Konfigurations-Daten des ausgezeichneten Konfigurations-Profils aus der Datenbank abgerufen werden,
wobei vorzugsweise
(i)die abgerufenen Konfigurations-Daten wenigstens allgemeine Konfigurations-Daten, insbesondere der zweiten allgemeinen Gruppe und/oder der dritten allgemeinen Gruppe, insbesondere der ersten dritten, zweiten dritten und/oder dritten dritten allgemeinen Gruppe, und/oder spezifische Konfigurations-Daten, insbesondere der zweiten spezifischen Gruppe, aufweisen,
(ii) wenigstens die abgerufenen Konfigurations-Daten innerhalb einer Datenstruktur strukturiert werden, die zumindest teilweise auf den die abgerufenen Konfigurations-Daten miteinander assoziierenden Assoziierungs-Daten basiert oder durch diese abgebildet wird,
(iii) dieses Verarbeiten der Daten nach einem Auswerten des Steuersignals und einem Feststellen eines zweiten Wertes des Steuersignals erfolgt und/oder mittels eines zweiten Moduls erfolgt das, vorzugsweise auf das Feststellen des zweiten Wertes des Steuersignals hin, ausgewählt und/oder ausgeführt wird,
   und/oder
(iv) das Kontrollsignal die Datenstruktur und/oder die abgerufenen Konfigurations-Daten aufweist.

Das Verfahren ermöglicht es damit zuverlässig, anhand eines Identifizierers allgemeine oder spezifische Konfigurations-Profile bereitzustellen, um sie etwa einem bestimmten Typ von Entität oder einer spezifischen Entität bereitstellen zu können. Beispielsweise entspricht der Identifizierer einem Wurzel-Element des auszuwählenden allgemeinen Konfigurations-Profils.

In einer Ausführungsform entspricht der Identifizierer einem allgemeinen und/oder spezifischen Konfigurations-Datum.

Beispielsweise kann vorliegend das ausgezeichnete Konfigurations-Profil ein allgemeines oder spezifisches Konfigurations-Profil darstellen.

Der Einsatz einer Datenstruktur ermöglicht es, dass neben den reinen Daten auch Informationen zur weiteren Verarbeitung dieser Daten besonders effektiv bereitgestellt werden können. So kann mittels der Datenstruktur unterschiedliche Arten von Daten gekennzeichnet werden. Beispielsweise können so Parameter (z.B. "Drehgeschwindigkeit") und ihre Werte (z.B. "5 U/min") einander zugeordnet und/oder voneinander unterscheidbar präsentiert werden. Dadurch kann ein technisches System, das die Datenstruktur übermittelt bekommt, basierend auf der Datenstruktur wirkungsvoll arbeiten. Außerdem ermöglicht es die Datenstruktur, die gesamte Information kompakt übertragen zu können und damit mit wenig Systemressourcen auszukommen.

Wenn das Kontrollsignal die Konfigurations-Daten aufweist, kann einem technisches System, das das Kontrollsignal empfängt, die Konfigurations-Daten besonders einfach und zuverlässig erhalten.

Die oben beschriebenen Vorteile und Optionen zu Steuersignal und modularem Aufbau gelten hier ganz entsprechend. In der Tat ist es bevorzugt, dass nur ein einziges Steuersignal empfangen und/oder ausgewertet wird, um die weiteren Maßnahmen anhand des Wertes dieses einen Steuersignals entschieden werden.

In einer Ausführungsform wird das zweite Modul zu wenigstens einem zweiten Zeitpunkt ausgewählt bzw. ausgeführt. Das heißt, zu dem zweiten Zeitpunkt werden die Konfigurations-Daten aus der Datenbank abgerufen. Optional liegt der zweite Zeitpunkt vor oder nach dem ersten Zeitpunkt.

In einer bevorzugten Ausführungsform kann vorgesehen sein, dass das Verarbeiten der Konfigurations- bzw. Assoziierungs-Daten aufweist, dass das ausgezeichnete Konfigurations-Profil mit einem weiteren ausgewählten Konfigurations-Profil vergleichen wird, und insbesondere zumindest einige der gemeinsamen und/oder unterschiedlichen allgemeinen Konfigurations-Daten der beiden Konfigurations-Profile ermittelt werden,
und wobei das Kontrollsignal indikativ ist für ein Ergebnis dieses Vergleichs, insbesondere für die Gemeinsamkeiten bzw. Unterschiede zwischen den beiden Konfigurations-Profilen, wobei vorzugsweise ein Unterschied wenigstens dadurch gekennzeichnet ist, dass in den beiden Konfigurations-Profilen zumindest teilweise unterschiedliche zweite allgemeine Konfigurations-Daten bestehen und/oder wenn in den beiden Konfigurations-Profilen gleiche zweite allgemeine Konfigurations-Daten mit unterschiedlichen dritten allgemeinen Konfigurations-Daten assoziiert sind,
wobei vorzugsweise dieses Verarbeiten der Daten nach einem Auswerten des Steuersignals und einem Feststellen eines dritten Wertes des Steuersignals erfolgt und/oder mittels eines dritten Moduls erfolgt das, vorzugsweise auf das Feststellen des dritten Wertes des Steuersignals hin, ausgewählt und/oder ausgeführt wird.

Der Vergleich der beiden Konfigurations-Profile kann aufgrund der gemeinsamen Datenbasis sehr effizient ablaufen. Es müssen keine Referenzlisten für die einander entsprechenden Daten unterschiedlicher Konfigurations-Profile von unterschiedlichen Entitäts-Typen geführt werden.

Beispielsweise kann vorliegend das ausgezeichnete Konfigurations-Profil ein allgemeines oder spezifisches Konfigurations-Profil darstellen.

Die oben beschriebenen Vorteile und Optionen zu Steuersignal und modularem Aufbau gelten hier ganz entsprechend. In der Tat ist es bevorzugt, dass nur ein einziges Steuersignal empfangen und/oder ausgewertet wird, um die weiteren Maßnahmen anhand des Wertes dieses einen Steuersignals entschieden werden.

In einer Ausführungsform wird das dritte Modul zu wenigstens einem dritten Zeitpunkt ausgewählt bzw. ausgeführt. Das heißt, zu dem dritten Zeitpunkt wird der Vergleich durchgeführt. Optional liegt der dritte Zeitpunkt vor oder nach dem zweiten Zeitpunkt.

In einer bevorzugten Ausführungsform kann vorgesehen sein, dass der Identifizierer von Seiten einer ersten Quelle empfangen wird;
die spezifischen Konfigurations-Daten von Seiten der ersten und/oder einer zweiten Quelle empfangen werden;
das Steuersignal von Seiten der ersten, der zweiten und/oder einer dritten Quelle empfangen wird;
und/oder
der Empfänger identisch mit der ersten, der zweiten und/oder der dritten Quelle ist.

Wenn von der ersten Quelle der Identifizierer empfangen wird, und ihr auch das Kontrollsignal bereitgestellt wird, kann die Kommunikation besonders effizient ablaufen. Beispielsweise kann die Verbindung zu der ersten Quelle zwischen Empfangen und Senden bestehen bleiben. Dadurch können ressourcenintensive Vorgänge für das Aufbauen und Beenden einer Kommunikationsverbindung zwischen den Teilnehmern entfallen.

Die Aufgabe wird durch die Erfindung gemäß einem zweiten Aspekt dadurch gelöst, dass eine Vorrichtung, die dazu eingerichtet ist, ein Verfahren gemäß dem ersten Aspekt der Erfindung auszuführen, wobei die Vorrichtung vorzugsweise wenigstens einen Server und/oder wenigstens ein Cloud-System aufweist oder darstellt, vorgeschlagen wird.

Damit kann das Verfahren gemäß dem ersten Aspekt der Erfindung besonders einfach ausgeführt werden. Beispielsweise kann die Vorrichtung zumindest zeitweise während der Durchführung des Verfahrens mit einer spezifischen Entität oder einem Client gekoppelt werden. Beispielsweise kann die Vorrichtung und die Entität bzw. der Client mittels einer Funkschnittstelle, wie insbesondere Wireless LAN, RFID oder Bluetooth, einer Kabelverbindung, wie LAN oder USB, oder über das Internet miteinander verbunden werden, so dass beide Daten miteinander austauschen können.

Vorzugsweise stellt die Vorrichtung einen Computer, insbesondere einen Server, oder ein Computernetzwerk dar oder weist diesen bzw. dieses auf. Vorzugsweise weist die Vorrichtung einen Prozessor und/oder einen Speicher auf. Der Prozessor kann beispielsweise eingerichtet sein, das Verfahren auszuführen. Der Speicher kann beispielsweise die wenigstens eine Datenbank aufweisen. In einer Ausführungsform weist die Vorrichtung die wenigstens eine Datenbank auf.

Die Aufgabe wird durch die Erfindung gemäß einem dritten Aspekt dadurch gelöst, dass ein Verfahren, welches mit einem Verfahren gemäß dem ersten Aspekt der Erfindung zusammenwirkt, aufweist:
Senden eines Identifizierers wenigstens eines Konfigurations-Profils;
Empfangen des Kontrollsignals, wobei vorzugsweise das empfangene Kontrollsignal die von dem Konfigurations-Profil aufgewiesene Konfigurations-Daten einer Entität aufweist, und
Konfigurieren der Entität auf Basis des empfangenen Kontrollsignals, insbesondere auf Basis der Konfigurations-Daten, wobei vorzugsweise das Kontrollsignal für ein oder mehrere Konfigurations-Daten indikativ ist und für diese Konfigurations-Daten eine Konfiguration der Entität erst wenigstens nach einer empfangenen Bestätigung durchgeführt wird.

Vorzugsweise weist das empfangene Kontrollsignal die von dem Konfigurations-Profil aufgewiesene Konfigurations-Daten auf.

In einer Ausführungsform ist das Verfahren computer-implementiert.

In einer Ausführungsform wird das Verfahren von wenigstens einem Client, insbesondere einem Smartphone und/oder einer Entität ausgeführt. Das Verfahren kann alternativ oder ergänzend durch ein eingebettetes System und/oder durch ein Betriebssystem ausgeführt werden.

In einer bevorzugten Ausführungsform kann vorgesehen sein, dass die Konfigurations-Daten innerhalb einer Datenstruktur strukturiert sind, welche die Beziehungen der einzelnen Konfigurations-Daten zueinander beschreibt oder beschreibbar macht;
das Verfahren ferner aufweist: Senden von Konfigurations-Daten, insbesondere aufweisend die gemäß dem ersten Aspekt der Erfindung empfangenen und in der Datenbank gespeicherten spezifischen Konfigurations-Daten der Entität;
und/oder
das Verfahren ferner aufweist: Konfigurieren der Entität auf Basis des empfangenen Kontrollsignals, insbesondere auf Basis der Konfigurations-Daten, wobei vorzugsweise das Kontrollsignal für ein oder mehrere Konfigurations-Daten indikativ ist, und für diese Konfigurations-Daten eine Konfiguration der Entität erst wenigstens nach einer empfangenen Bestätigung durchgeführt wird.

Das Konfigurieren der Entität kann aufweisen, dass Konfigurations-Daten in einem Speicher der Entität gespeichert werden.

Die Aufgabe wird durch die Erfindung gemäß einem vierten Aspekt dadurch gelöst, dass eine Vorrichtung, die dazu eingerichtet ist, ein Verfahren gemäß dem dritten Aspekt der Erfindung auszuführen, wobei die Vorrichtung vorzugsweise ein Teil einer Entität, wie ein Steuermodul, und/oder ein Smartphone aufweist oder darstellt, vorgeschlagen wird.

Damit kann das Verfahren gemäß dem dritten Aspekt der Erfindung besonders einfach ausgeführt werden. Beispielsweise kann die Vorrichtung zumindest zeitweise während der Durchführung des Verfahrens mit einem Server und/oder der Entität gekoppelt werden. Beispielsweise kann die Vorrichtung und der Server bzw. die Entität mittels einer Funkschnittstelle, wie insbesondere Wireless LAN, RFID oder Bluetooth, einer Kabelverbindung, wie LAN oder USB, oder über das Internet miteinander verbunden werden, so dass beide Daten miteinander austauschen können.

Vorzugsweise weist die Vorrichtung einen Prozessor und/oder einen Speicher auf. Der Prozessor kann beispielsweise eingerichtet sein, das Verfahren auszuführen.

Optional ist die Entität eine automatische Anlage, wie eine automatische Tür-, Tor-, Fenster- und/oder Lichtanlage. Die Vorrichtung kann alternativ oder ergänzend ein eingebettetes System aufweisen oder darstellen.

Die Aufgabe wird durch die Erfindung gemäß einem fünften Aspekt dadurch gelöst, dass ein Computerprogrammprodukt, umfassend Befehle, die bei der Ausführung des Programms durch eine Vorrichtung zur Datenverarbeitung, insbesondere die Vorrichtung gemäß dem zweiten Aspekt der Erfindung und/oder gemäß dem vierten Aspekt der Erfindung, diese veranlassen, das Verfahren gemäß dem ersten Aspekt der Erfindung und/oder gemäß dem dritten Aspekt der Erfindung auszuführen vorgeschlagen wird.

Ein Computerprogrammprodukt kann beispielsweise als CD, DVD, ROM/RAM, Blue-Ray-Disc, USB-Speicher, SSD-Speicher, magnetische Festplatte, und/oder dergleichen ausgestaltet sein. Ein Computerprogrammprodukt kann alternativ oder ergänzend auch als, vorzugsweise auf einem computerlesbaren Medium abgespeicherte oder abspeicherbare, Datei ausgestaltet sein. Die Datei kann dann beispielsweise, insbesondere auf einer Vorrichtung zur Datenverarbeitung, ausführbar sein, um das Verfahren ausführen zu können.

Vorzugsweise wird dabei das Verfahren gemäß dem ersten Aspekt der Erfindung durch die Vorrichtung gemäß dem zweiten Aspekt der Erfindung und/oder das Verfahren gemäß dem dritten Aspekt der Erfindung durch die Vorrichtung gemäß dem vierten Aspekt der Erfindung ausgeführt.

Die Aufgabe wird durch die Erfindung gemäß einem sechsten Aspekt dadurch gelöst, dass eine Signalfolge, repräsentierend Befehle, die, wenn sie auf einer Vorrichtung zur Datenverarbeitung, insbesondere die Vorrichtung gemäß dem zweiten Aspekt der Erfindung und/oder gemäß dem vierten Aspekt der Erfindung, ausgeführt werden, die Vorrichtung veranlassen, das Verfahren gemäß dem ersten Aspekt der Erfindung und/oder gemäß dem dritten Aspekt der Erfindung auszuführen vorgeschlagen wird.

Die Signalfolge kann beispielsweise über ein Computernetzwerk, wie dem Internet, übertragbar sein. Beispielsweise kann die Signalfolge das Computerprogrammprodukt repräsentieren, insbesondere als aus dem Computernetzwerk herunterladbare Datei.

Vorzugsweise wird dabei das Verfahren gemäß dem ersten Aspekt der Erfindung durch die Vorrichtung gemäß dem zweiten Aspekt der Erfindung und/oder das Verfahren gemäß dem dritten Aspekt der Erfindung durch die Vorrichtung gemäß dem vierten Aspekt der Erfindung ausgeführt.

### Kurze Beschreibung der Zeichnungen

Weitere Merkmale und Vorteile der Erfindung ergeben sich aus der nachfolgenden Beschreibung, in der bevorzugte Ausführungsformen der Erfindung anhand schematischer Zeichnungen erläutert werden.

Dabei zeigen:
- Fig. 1: ein Ablaufdiagramm eines Verfahrens gemäß dem ersten Aspekt der Erfindung in einer ersten Ausgestaltung;
- Fig. 2: eine Vorrichtung, die dazu eingerichtet ist, das Verfahren gemäß dem ersten Aspekt der Erfindung in der ersten Ausgestaltung auszuführen;
- Fig. 3a: erste allgemeine Konfigurations-Daten;
- Fig. 3b: zweite allgemeine Konfigurations-Daten;
- Fig. 3c: dritte allgemeine Konfigurations-Daten;
- Fig. 4: allgemeine Assoziierungs-Daten;
- Fig. 5: ein Ablaufdiagramm eines Verfahrens gemäß dem ersten Aspekt der Erfindung in einer zweiten Ausgestaltung;
- Fig. 6: ein Ablaufdiagramm eines Verfahrens gemäß dem ersten Aspekt der Erfindung in einer dritten Ausgestaltung;
- Fig. 7a: erste spezifische Konfigurations-Daten;
- Fig. 7b: zweite spezifische Konfigurations-Daten;
- Fig. 8a: spezifische Assoziierungs-Daten; und
- Fig. 8b: spezifische Assoziierungs-Daten.

### Beschreibung der Ausführungsformen

Das Verfahren gemäß dem ersten Aspekt der Erfindung ermöglicht es, die Konfigurations-Daten von unterschiedlichen Entitäten unterschiedlichen Typs zu verwalten. Vorliegend können die Daten von drei Typen von Entitäten verwaltet werden:
Erstens: Eine automatische Türanlage in Form einer Karusselltüre des Modells "T1". Für diese kann ein Parameter "Drehgeschwindigkeit" in einem Bereich zwischen "1 und 5" ausgewählt werden.
Zweitens: Eine automatische Türanlage in Form einer Karusselltüre des Modells "T2". Für diese kann ein Parameter "Drehgeschwindigkeit" in einem Bereich zwischen "1 und 7" ausgewählt werden und außerdem ein Parameter "Betriebsmodus", der den Wert "1 oder 2" haben kann, je nachdem, ob sich die Türe ständig drehen soll, oder nur dann, wenn eine Person im Bereich der Türe erkannt wurde.
Drittens: Eine automatische Fensteranlage des Modells "F1". Für diese kann ein Parameter "Öffnungsgeschwindigkeit" in einem Bereich zwischen "1 und 5" ausgewählt werden.

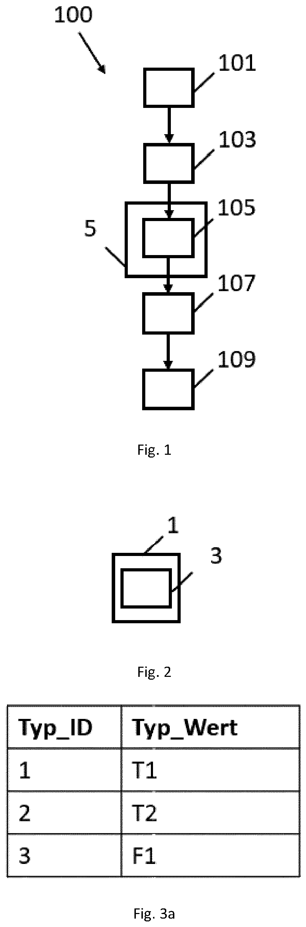

Fig. 1 zeigt ein Ablaufdiagramm 100 eines Verfahrens gemäß dem ersten Aspekt der Erfindung in einer ersten Ausgestaltung.

Fig. 2 zeigt eine Vorrichtung 1, die als Server ausgestaltet, gemäß dem zweiten Aspekt der Erfindung. Die Vorrichtung 1 ist dazu eingerichtet das Verfahren gemäß dem ersten Aspekt der Erfindung in der ersten Ausgestaltung auszuführen und weist eine Datenbank 3 auf.

Die Datenbank 3 weist eine Mehrzahl von allgemeinen Konfigurations-Daten auf. Die allgemeinen Konfigurations-Daten sind dabei all diejenigen Konfigurations-Daten, welche für die zu verwaltenden unterschiedlichen Entitäts-Typen relevant sind.

Die allgemeinen Konfigurations-Daten sind in den Figuren 3a bis 3c tabellarisch dargestellt. Jedes pro Zeile dargestellte allgemeine Konfigurations-Datum weist dabei eine ID und einen Wert auf. Das heißt, über die ID kann auf den jeweiligen Wert des allgemeinen Konfigurations-Datums zugegriffen werden.

Figur 3a zeigt die von der Datenbank 3 aufgewiesenen ersten allgemeinen Konfigurations-Daten. Die ersten allgemeinen Konfigurations-Daten stellen Typ-Bezeichnungen der möglichen Entitäten dar, nämlich das jeweilige Modell. Wie oben beschrieben wurde, sind dies vorliegend die drei Entitäts-Typen "T1", "T2" und "F1".

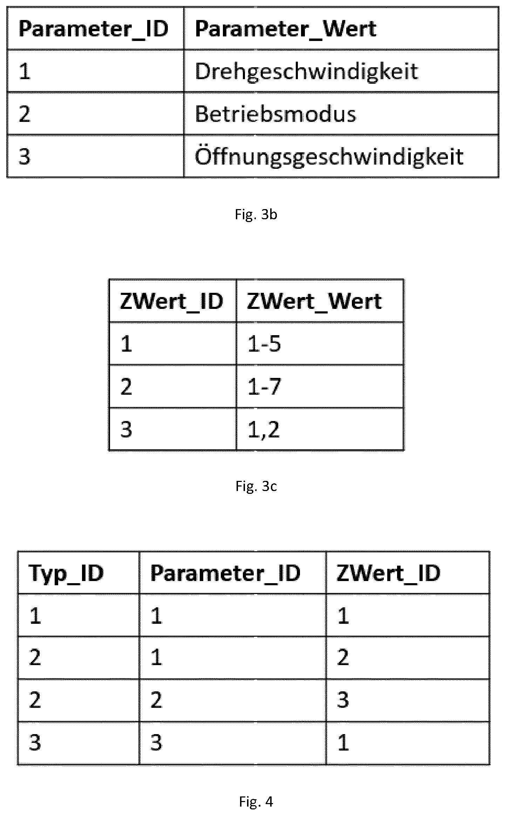

Figur 3b zeigt die von der Datenbank 3 aufgewiesenen zweiten allgemeinen Konfigurations-Daten. Die zweiten allgemeinen Konfigurations-Daten stellen die für die möglichen Entitäten verfügbaren Parameter dar, die konfiguriert werden können. Wie oben beschrieben wurde, gibt es für die drei möglichen Entitäts-Typen die Parameter "Drehgeschwindigkeit", "Betriebsmodus" und "Öffnungsgeschwindigkeit". Obwohl der Drehgeschwindigkeits-Parameter für mehrere Entitäten (nämlich die vom Typ T1 und T2) relevant ist, muss er nur einmal in der Datenbank 3 vorgesehen werden.

Figur 3c zeigt die von der Datenbank 3 aufgewiesenen dritten allgemeinen Konfigurations-Daten. Die dritten allgemeinen Konfigurations-Daten stellen die zulässigen Werte oder Wertebereiche (ZWerte) dar, die für die Parameter bei den jeweiligen Entitäten eingestellt werden dürfen. Wie oben beschrieben wurde, bestehen für die drei möglichen Parameter insgesamt drei verschiedene zulässige Werte bzw. Wertebereiche, nämlich ʺ1-5" für den Parameter "Drehgeschwindigkeit" bei Türanlage "T1" und für den Parameter "Öffnungsgeschwindigkeit" bei Fensteranlage "F1", "1-7" für den Parameter "Drehgeschwindigkeit" bei Türanlage "T2" und "1 oder 2" für den Parameter "Betriebsmodus" der Türanlage "T2".

Obwohl der zulässige Wertebereich ʺ1-5" sowohl bei dem Parameter "Drehgeschwindigkeit" der Türanlage "T1" als auch bei dem Parameter "Öffnungsgeschwindigkeit" der Fensteranlage "F1" zum Einsatz kommt, muss er nur einmal in der Datenbank 3 vorgesehen werden.

Die Datenbank 3 weist ferner eine Mehrzahl von allgemeinen Assoziierungs-Daten auf. Die allgemeinen Assoziierungs-Daten beschreiben jeweils Beziehungen zwischen mehreren, nämlich vorliegend drei, allgemeinen Konfigurations-Daten.

Die allgemeinen Assoziierungs-Daten sind in der Figur 4 tabellarisch dargestellt. Jedes pro Zeile dargestellte allgemeine Assoziierungs-Datum beschreibt dabei eine Beziehung zwischen den in der Zeile durch ihre ID dargestellten allgemeinen Konfigurations-Daten. Vorliegend wird also eine Beziehung zwischen einem Entitäts-Typ (erstes allgemeines Konfigurations-Datum), einem Parameter (zweites allgemeines Konfigurations-Datum) und einem zulässigen Wert oder Wertebereich (drittes allgemeines Konfigurations-Datum) beschrieben.

So wird in der ersten Zeile eine Beziehung zwischen dem Entitäts-Typ mit der ID "1" und dem Parameter mit der ID "1" und dem zulässigen Wert oder Wertebereich mit der ID "1" beschrieben. Über die jeweiligen allgemeinen Konfigurations-Daten (Fig. 3a-3c) kann dies aufgelöst werden in eine Beziehung zwischen dem Entitäts-Typ "T1" und dem Paramater "Drehgeschwindigkeit" und dem zulässigen Wert oder Wertebereich "1-5".

Gleichermaßen wird in der zweiten Zeile eine Beziehung zwischen dem Entitäts-Typ mit der ID "2" und dem Parameter mit der ID "1" und dem zulässigen Wert oder Wertebereich mit der ID "2" beschrieben. Über die jeweiligen allgemeinen Konfigurations-Daten (Fig. 3a-3c) kann dies aufgelöst werden in eine Beziehung zwischen dem Entitäts-Typ "T2" und dem Paramater "Drehgeschwindigkeit" und dem zulässigen Wert oder Wertebereich "1-7".

Entsprechendes kann für die dritte und vierte Zeile erfolgen, womit die beiden verbleibenden Parameter und ihre zulässigen Werte bzw. Wertebereiche erhalten werden.

Somit kann für jeden Entitäts-Typ (T1, T2 und F1) anhand der jeweiligen Typ_ID über die allgemeinen Assoziierungs-Daten (Fig. 4) die für diesen Entitäts-Typ verfügbaren Parameter samt zulässigen Werten bzw. Wertebereiche ermittelt werden, indem diejenigen Assoziierungs-Daten berücksichtigt werden, die eine Beziehung für die entsprechende Typ_ID beschreiben.

Dadurch lässt sich für jeden Entitäts-Typ sein allgemeines Konfigurations-Profil bereitstellen.

Oder anders ausgedrückt, durch Gruppen von allgemeinen Assoziierungs-Daten (Zeile 1 in Fig. 4, Zeilen 2+3 in Fig. 4 und Zeile 4 in Fig. 4) sind unterschiedliche allgemeine Konfigurations-Profile (für T1, T2 bzw. F1) mit jeweils zumindest paarweise in Beziehung stehenden allgemeinen Konfigurations-Daten (Typ, Parameter, ZWert) definiert, wobei unterschiedliche allgemeine Konfigurations-Profile zumindest teilweise unterschiedliche allgemeine Konfigurations-Daten aufweisen (denn keines der Konfigurations-Profile für T1, T2 und F1 weist nur gleiche Parameter und ZWerte auf).

Vorliegend soll eine spezifische Entität des Typs "T1" in Betrieb genommen werden. Dazu soll das für diesen Entitäts-Typ relevante allgemeine Konfigurations-Profil bereitgestellt werden.

In 101 wird die Datenbank 3 bereitgestellt. Die Datenbank 3 weist, wie gerade erörtert, unterschiedliche Daten auf.

In 103 wird ein Identifizierer, der ein ausgezeichnetes Konfigurations-Profil identifizierbar macht, empfangen. Der Identifizierer entspricht dabei gerade dem ersten allgemeinen Konfigurations-Datum "T1" und macht damit das für diesen Entitäts-Typ relevante allgemeine Konfigurations-Profil als ausgezeichnetes Konfigurations-Profil identifizierbar (so können über die Daten in Fig. 3a die Typ_ID "1" und über die Assoziierungs-Daten in Fig. 4 die mit dieser ID assoziierten allgemeine Konfigurations-Daten ermittelt werden).

In 105 werden die allgemeinen Konfigurations-Daten des allgemeinen Konfigurations-Profils für den Entitäts-Typ "T1" aus der Datenbank 3 abgerufen. Diese weisen dabei allgemeine Konfigurations-Daten der zweiten allgemeinen Gruppe und dritten allgemeinen Gruppe auf, also die Parameter und die damit jeweils assoziierten zulässigen Werte bzw. Wertebereiche.

Dies erfolgt dabei auf die Auswertung eines empfangenen Steuersignal hin, während dessen ein zweiter Wert für das Steuersignal festgestellt wurde, und im Rahmen eines zweiten Moduls 5. Dieses zweite Modul 5 wurde dazu aufgrund des Festgestellten zweiten Wertes ausgewählt und ausgeführt.

In 107 wird ein Kontrollsignal erzeugt, das die abgerufenen allgemeinen Konfigurations-Daten des ausgezeichneten Konfigurations-Profils aufweist. Die abgerufenen allgemeinen Konfigurations-Daten sind vorliegend das Ergebnis der Datenverarbeitung.

In 109 wird das Kontrollsignal an die spezifische Entität oder an einen Client, wie ein Smartphone, der mit der spezifischen Entität in Verbindung stehen kann, gesendet, so dass die spezifische Entität mit dem ausgezeichneten Konfigurations-Profil konfiguriert werden kann.

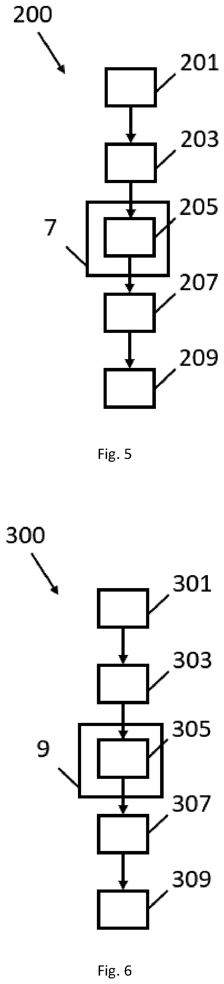

Fig. 5 zeigt ein Ablaufdiagramm 200 eines Verfahrens gemäß dem ersten Aspekt der Erfindung in einer zweiten Ausgestaltung. Die Vorrichtung 1 kann alternativ oder ergänzend auch diese Ausgestaltung des Verfahrens ausführen und weist die Datenbank 3 wie oben beschrieben auf.

Vorliegend soll eine spezifische Entität des Typs "T1" auf eine Entität des Typs "T2" aufgerüstet werden. Dazu soll das neue allgemeine Konfigurations-Profil für den neuen Entitäts-Typ bereitgestellt werden und außerdem Unterschiede zwischen dem alten und neuen Konfigurations-Profil identifiziert werden, so dass die Konfiguration nur für die geänderten Parameter vorgenommen werden muss.

In 201 wird die Datenbank 3 bereitgestellt. Die Datenbank 3 weist, wie oben erörtert, unterschiedliche Daten auf.

In 203 wird ein Identifizierer, der ein ausgezeichnetes Konfigurations-Profil identifizierbar macht, empfangen. Der Identifizierer entspricht dabei gerade dem ersten allgemeinen Konfigurations-Datum "T2" und macht damit das für den neuen Entitäts-Typ relevante allgemeine Konfigurations-Profil als ausgezeichnetes Konfigurations-Profil identifizierbar (so können über die Daten in Fig. 3a die Typ_ID "2" und über die Assoziierungs-Daten in Fig. 4 die mit dieser ID assoziierten allgemeine Konfigurations-Daten ermittelt werden).

In 205 werden die allgemeinen Konfigurations-Daten des allgemeinen Konfigurations-Profils für den Entitäts-Typ "T2" aus der Datenbank 3 abgerufen. Diese weisen dabei allgemeine Konfigurations-Daten der zweiten allgemeinen Gruppe und dritten allgemeinen Gruppe auf, also die Parameter und die damit jeweils assoziierten zulässigen Werte bzw. Wertebereiche.

Außerdem wird als weiteres ausgewählte Konfigurations-Profil das allgmeine Konfigurations-Profil für den Entitäts-Typ "T1" aus der Datenbank 3 abgerufen, also zu dem alten Entitäts-Typ. Dazu kann ein entsprechender weiterer Identifizierer empfangen worden sein.

Anschließend werden diese beiden Profile miteinander verglichen. Die Unterschiede sind dabei, dass unterschiedliche zweite allgemeine Konfigurations-Daten bestehen, nämlich der Parameter "Betriebsmodus" nur in Entitäts-Typ "T2" vorhanden ist. Außerdem, dass gleiche zweite allgemeine Konfigurations-Daten mit unterschiedlichen dritten allgemeinen Konfigurations-Daten assoziiert sind, nämlich vorliegend zwar beide Entitäts-Typen eine "Drehgeschwindigkeit" als Parameter aufweisen, jedoch unterschiedliche zulässige Wertebereiche dafür vorgesehen sind, nämlich ʺ1-5" bzw. "1-7".

Dies erfolgt dabei auf die Auswertung eines empfangenen Steuersignal hin, während dessen ein zweiter und dritter Wert für das Steuersignal festgestellt wurde, und im Rahmen eines zweiten und dritten Moduls. Diese Module sind vorliegend als ein gemeinsames Modul 7 ausgestaltet, könnten jedoch auch getrennt voneinander ausgeführt sein. Das Modul 7 wurde dazu aufgrund des Festgestellten zweiten und dritten Wertes ausgewählt und ausgeführt.

In 207 wird ein Kontrollsignal erzeugt, das die abgerufenen allgemeinen Konfigurations-Daten des ausgezeichneten Konfigurations-Profils aufweist. Das Kontrollsignal ist außerdem indikativ für die Unterschiede zwischen den beiden allgemeinen Konfigurations-Profilen.

In 209 wird das Kontrollsignal an die spezifische Entität oder an einen Client, wie ein Smartphone, der mit der spezifischen Entität in Verbindung stehen kann, gesendet, so dass die spezifische Entität mit dem ausgezeichneten Konfigurations-Profil konfiguriert werden kann, soweit dieses von dem vorherigen Profil unterschiedlich ist. So ermöglicht es das gesendete Kontrollsignal, dass die Konfiguration nur für die unterschiedlichen Parameter erfolgt, während die gleichen Parameter nicht neu konfiguriert werden müssen, sofern sie sich in den zulässigen Bereichen bewegen. Vorliegend ist dies gegeben, da für den Entitäts-Typ "T1" nur die Drehgeschwindigkeit konfiguriert werden konnte, und sich deren zulässiger Wertebereich bei dem Entitäts-Typ "T2" sogar vergrößert).

Fig. 6 zeigt ein Ablaufdiagramm 300 eines Verfahrens gemäß dem ersten Aspekt der Erfindung in einer dritten Ausgestaltung. Die Vorrichtung 1 kann alternativ oder ergänzend auch diese Ausgestaltung des Verfahrens ausführen und weist die Datenbank 3 wie oben beschrieben auf.

Vorliegend sollen die spezifischen Konfigurations-Daten einer spezifischen Entität des Typs "T1" in der Datenbank 3 zusammen mit dem für diesen Typ relevanten allgemeinen Konfigurations-Profil als spezifisches Konfigurations-Profil gespeichert werden.

In 301 wird die Datenbank 3 bereitgestellt. Die Datenbank 3 weist, wie gerade erörtert, unterschiedliche Daten auf.

In 303 wird ein Identifizierer, der ein ausgezeichnetes Konfigurations-Profil identifizierbar macht, empfangen. Der Identifizierer entspricht dabei gerade dem ersten allgemeinen Konfigurations-Datum "T1" und macht damit das für diesen Entitäts-Typ relevante allgemeine Konfigurations-Profil als ausgezeichnetes Konfigurations-Profil identifizierbar. Der Identifizierer könnte auch ein spezifisches Konfigurations-Profil für die jeweilige Entität identifizierbar machen, worüber wiederum das allgemeine Konfigurations-Profil identifizierbar wäre. Dies kann etwa dann vorteilhaft sein, wenn bereits zuvor spezifischen Konfigurations-Daten gespeichert wurden und diese aktualisiert werden sollen.

In 305 werden die spezifischen Konfigurations-Daten der spezifischen Entität empfangen und zusammen mit spezifischen Assoziierungs-Daten in der Datenbank 3 gespeichert.

Vorliegend gibt es zwei unterschiedliche spezifische Konfigurations-Daten, die empfangen und gespeichert werden. Zum einen wird eine Entitäts-Kennung, die eine Seriennummer der spezifischen Entität darstellt und die einem ersten spezifischen Konfigurations-Datum entspricht, verarbeitet. Zum anderen wird der Wert des (einzigen) Parameters verarbeitet, der für die spezifische Entität des Typs "T1" gewählt wurde und der einem zweiten spezifischen Konfigurations-Datum entspricht.

Die Datenbank 3 weist (spätestens) dann eine Mehrzahl von spezifischen Konfigurations-Daten auf. Die spezifischen Konfigurations-Daten sind dabei all diejenigen Konfigurations-Daten, welche jeweils für spezifische Entitäten relevant sind.

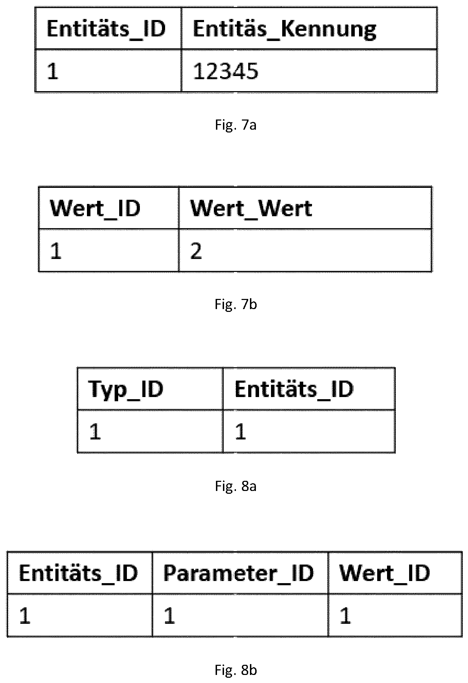

Die spezifischen Konfigurations-Daten der hier betrachteten spezifischen Entität sind in den Figuren 7a bis 7b tabellarisch dargestellt. Jedes pro Zeile dargestellte spezifische Konfigurations-Datum weist dabei eine ID und einen Wert auf. Das heißt, über die ID kann auf den jeweiligen Wert des spezifischen Konfigurations-Datums zugegriffen werden.

Die Datenbank 3 weist (spätestens) dann eine Mehrzahl von spezifischen Assoziierungs-Daten auf. Die spezifischen Assoziierungs-Daten beschreiben jeweils Beziehungen zwischen einem allgemeinen Konfigurations-Daten des ausgezeichneten Konfigurations-Profils und einem der empfangenen spezifischen Konfigurations-Daten oder Beziehungen zwischen einem allgemeinen Konfigurations-Daten des ausgezeichneten Konfigurations-Profils und zwei der empfangenen spezifischen Konfigurations-Daten.

Die spezifischen Assoziierungs-Daten sind in den Figuren 8a-8b tabellarisch dargestellt. Jedes pro Zeile dargestellte allgemeine Assoziierungs-Datum beschreibt dabei eine Beziehung zwischen den in der Zeile durch ihre ID dargestellten Konfigurations-Daten aus den Figs. 3a-3c und Figs. 7a-7b.

Figur 8a zeigt von der Datenbank 3 aufgewiesene spezifische Assoziierungs-Daten, von denen jedes Assoziierungs-Datum eine Beziehung zwischen einem Entitäts-Typ (erstes allgemeines Konfigurations-Datum) und einer Entitäts-Kennung (erstes spezifisches Konfigurations-Datum) beschreibt.

Figur 8b zeigt von der Datenbank 3 aufgewiesene spezifische Assoziierungs-Daten, von denen jedes Assoziierungs-Datum eine Beziehung zwischen einer Entitäts-Kennung (erstes spezifisches Konfigurations-Datum) und einem Parameter (zweites allgemeines Konfigurations-Datum) und einem Wert (zweites spezifisches Konfigurations-Datum) beschreibt.

Durch ein spezifisches Assoziierungs-Datum (Fig. 8a) wird die spezifische Entität (bzw. ihre Kennung) über die zugehörige Entitäts_ID "1" (Fig. 7a) mit einem bestimmten Entitäts-Typ anhand dessen Typ_ID "1" (Fig. 3a) in Beziehung gebracht. Vorliegen gibt es nur das Assoziierungs-Datum, das die Entitäts_ID "1" für die Kennung "12345" mit der Typ_ID "1" und damit mit dem Entitäts-Typ "T1" (Fig. 3a) assoziiert.

Durch ein weiteres spezifisches Assoziierungs-Datum (Fig. 8b) wird die spezifische Entität (bzw. ihre Kennung) über die zugehörige Entitäts_ID "1" (Fig. 7a), der Parameter mit Parameter_ID "1" (Fig. 3b) und der Wert "2" (Fig. 7b) in Verbindung gebracht. Mit anderen Worten, für die Entität mit der Kennung "12345" wird für den Parameter mit Parameter_ID "1" der Wert "2" definiert.

Dadurch wird ein spezifisches Konfigurations-Profil für die spezifische Entität definiert, das das ausgezeichnete Konfigurations-Profil und die empfangenen ersten spezifischen Konfigurations-Daten, die zumindest teilweise mit dem von dem ausgezeichneten Konfigurations-Profil aufgewiesenen Parameter in Beziehung stehen, aufweist.

Dies erfolgt dabei auf die Auswertung eines empfangenen Steuersignal hin, während dessen ein erster Wert für das Steuersignal festgestellt wurde, und im Rahmen eines ersten Moduls 9. Dieses erste Modul 9 wurde dazu aufgrund des Festgestellten ersten Wertes ausgewählt und ausgeführt.

In 307 wird ein Kontrollsignal erzeugt, das einen Zustand des Ergebnisses der Datenverarbeitung aufweist. Beispielsweise kann der Zustand eine erfolgreiche Datenverarbeitung repräsentieren.

In 309 wird das Kontrollsignal an die spezifische Entität oder an einen Client, wie ein Smartphone, der mit der spezifischen Entität in Verbindung stehen kann, gesendet.

Anschließend könnte mit einem Verfahren gemäß dem ersten Aspekt der Erfindung in der ersten Ausgestaltung (Fig. 2) auch das spezifische Konfigurations-Profil bereitgestellt werden, das entsprechend auch die spezifischen Konfigurations-Daten der spezifischen Entität aufweist. Dazu könnte als Identifizierer in 103 die Entitäts-Kennung "12345" empfangen werden, über die das spezifische Konfigurations-Profil identifizierbar ist.

Es ist möglich, dass die einzelnen Module 5, 7 und 9 zu unterschiedlichen Zeitpunkten ausgewählt und ausgeführt werden. Beispielsweise könnte dann zu den entsprechenden Zeitpunkten das Steuersignal den bzw. die entsprechenden Werte aufweisen.

### Bezugszeichenliste

- 1: Vorrichtung
- 3: Datenbank
- 5: Modul
- 7: Modul
- 9: Modul
- 100: Ablaufdiagramm
- 101: Bereitstellen einer Datenbank
- 103: Empfangen eines Identifizierers
- 105: Abrufen von Konfigurations-Daten aus der Datenbank
- 107: Erzeugen eines Kontrollsignals
- 109: Senden des Kontrollsignals
- 200: Ablaufdiagramm
- 201: Bereitstellen einer Datenbank
- 203: Empfangen eines Identifizierers
- 205: Abrufen von Konfigurations-Daten zweier Konfigurations-Profile aus der Datenbank und Vergleichen der Daten
- 207: Erzeugen eines Kontrollsignals
- 209: Senden des Kontrollsignals
- 300: Ablaufdiagramm
- 301: Bereitstellen einer Datenbank
- 303: Empfangen eines Identifizierers
- 305: Empfangen von spezifischen Konfigurations-Daten und Speichern in der Datenbank
- 307: Erzeugen eines Kontrollsignals
- 309: Senden des Kontrollsignals

## Patentansprüche

1. Verfahren zum Verarbeiten von Konfigurations-Daten einer Vielzahl von Entitäten, wobei das Verfahren aufweist:
Bereitstellen (101, 201, 301) wenigstens einer Datenbank, (3) die aufweist: eine Mehrzahl von allgemeinen Konfigurations-Daten und eine Mehrzahl von allgemeinen Assoziierungs-Daten, wobei die einzelnen allgemeinen Assoziierungs-Daten jeweils Beziehungen zwischen zwei oder mehreren allgemeinen Konfigurations-Daten beschreiben und dadurch Gruppen von allgemeinen Assoziierungs-Daten unterschiedliche allgemeine Konfigurations-Profile mit jeweils zumindest paarweise in Beziehung stehenden allgemeinen Konfigurations-Daten definieren, wobei unterschiedliche allgemeine Konfigurations-Profile zumindest teilweise unterschiedliche allgemeine Konfigurations-Daten aufweisen;
Empfangen (103, 203, 303) wenigstens eines Identifizierers, der wenigstens ein ausgezeichnetes Konfigurations-Profil identifizierbar macht;
Verarbeiten wenigstens von Konfigurations-Daten und/oder Assoziierungs-Daten im Zusammenhang mit dem ausgezeichneten Konfigurations-Profil sowie Erzeugen (107, 207, 307) eines Kontrollsignals basierend auf wenigstens einem Ergebnis der Verarbeitung; wobei das Verarbeiten der Konfigurations- bzw. Assoziierungs-Daten aufweist, dass spezifische Konfigurations-Daten einer spezifischen Entität empfangen werden und zusammen mit spezifischen Assoziierungs-Daten in der Datenbank gespeichert (305) werden, wobei die einzelnen spezifischen Assoziierungs-Daten jeweils Beziehungen zwischen einem oder mehreren allgemeinen Konfigurations-Daten des ausgezeichneten Konfigurations-Profils und/oder einem oder mehreren der empfangenen spezifischen Konfigurations-Daten beschreiben und dadurch ein spezifisches Konfigurations-Profil, das wenigstens das ausgezeichnete Konfigurations-Profil und die mit einem oder mehreren von diesem aufgewiesenen allgemeinen Konfigurations-Daten in Beziehung stehenden empfangenen spezifischen Konfigurations-Daten aufweist, definieren;
wobei das Kontrollsignal wenigstens einem Empfänger bereitgestellt wird, nämlich an diesen gesendet wird;
wobei die Entitäten automatische Türanlagen, automatische Toranlagen, automatische Fensteranlagen und/oder automatische Lichtanlagen aufweisen und/oder darstellen.

2. Verfahren nach Anspruch 1, wobei
(i) das Verarbeiten der Daten nach einem Auswerten eines Steuersignals und einem Feststellen eines ersten Wertes des Steuersignals erfolgt und/oder mittels eines ersten Moduls (9) erfolgt das, vorzugsweise auf das Feststellen des ersten Wertes des Steuersignals hin, ausgewählt und/oder ausgeführt wird, und/oder (ii) das Kontrollsignal einen Zustand des Ergebnisses der Datenverarbeitung aufweist.

3. Verfahren nach einem der vorangehenden Ansprüche, wobei
durch die allgemeinen Assoziierungs-Daten
(i) jedes erste allgemeine Konfigurations-Datum einer ersten allgemeinen Gruppe mit wenigstens einem, vorzugsweise mit mehreren, zweiten allgemeinen Konfigurations-Datum einer zweiten allgemeinen Gruppe in Beziehung gebracht wird,
und/oder
(ii) jedes zweite allgemeine Konfigurations-Datum der zweiten allgemeinen Gruppe mit wenigstens einem, vorzugsweise mit mehreren, dritten allgemeinen Konfigurations-Datum einer dritten allgemeinen Gruppe in Beziehung gebracht wird,
vorzugsweise jedes zweite allgemeine Konfigurations-Datum der zweiten allgemeinen Gruppe mit mehreren dritten allgemeinen Konfigurations-Daten von mehreren dritten allgemeinen Gruppen in Beziehung gebracht wird,
insbesondere jedes zweite allgemeine Konfigurations-Datum der zweiten allgemeinen Gruppe mit wenigstens einem, vorzugsweise mit mehreren, ersten dritten allgemeinen Konfigurations-Datum einer ersten dritten allgemeinen Gruppe, mit wenigstens einem, vorzugsweise mit mehreren, zweiten dritten allgemeinen Konfigurations-Datum einer zweiten dritten allgemeinen Gruppe und/oder mit wenigstens einem, vorzugsweise mit mehreren, dritten dritten allgemeinen Konfigurations-Datum einer dritten dritten allgemeinen Gruppe in Beziehung gebracht wird,
und/oder
durch die spezifischen Assoziierungs-Daten
(i) jedes erste spezifische Konfigurations-Datum einer ersten spezifischen Gruppe mit wenigstens einem, vorzugsweise mit genau einem oder mit mehreren, ersten allgemeinen Konfigurations-Datum der ersten allgemeinen Gruppe in Beziehung gebracht wird,
und/oder
(ii) jedes zweite spezifische Konfigurations-Datum einer zweiten spezifischen Gruppe mit wenigstens einem, vorzugsweise mit genau einem oder mit mehreren, zweiten allgemeinen Konfigurations-Datum der zweiten allgemeinen Gruppe, mit wenigstens einem, vorzugsweise mit genau einem oder mit mehreren, ersten spezifischen Konfigurations-Datum der ersten spezifischen Gruppe und/oder mit wenigstens einem, vorzugsweise mit genau einem oder mit mehreren, dritten, insbesondere ersten dritten, allgemeinen Konfigurations-Datum der dritten allgemeinen Gruppe in Beziehung gebracht wird.

4. Verfahren nach einem der vorangehenden Ansprüche, wobei
das Verarbeiten der Konfigurations- bzw. Assoziierungs-Daten aufweist, dass die Konfigurations-Daten des ausgezeichneten Konfigurations-Profils aus der Datenbank (3) abgerufen (105, 205) werden,
wobei vorzugsweise
(i) die abgerufenen Konfigurations-Daten wenigstens allgemeine Konfigurations-Daten, insbesondere der zweiten allgemeinen Gruppe und/oder der dritten allgemeinen Gruppe, insbesondere der ersten dritten, zweiten dritten und/oder dritten dritten allgemeinen Gruppe, und/oder spezifische Konfigurations-Daten, insbesondere der zweiten spezifischen Gruppe, aufweisen,
(ii) wenigstens die abgerufenen Konfigurations-Daten innerhalb einer Datenstruktur strukturiert werden, die zumindest teilweise auf den die abgerufenen Konfigurations-Daten miteinander assoziierenden Assoziierungs-Daten basiert oder durch diese abgebildet wird,
(iii) dieses Verarbeiten der Daten nach einem Auswerten des Steuersignals und einem Feststellen eines zweiten Wertes des Steuersignals erfolgt und/oder mittels eines zweiten Moduls (5) erfolgt das, vorzugsweise auf das Feststellen des zweiten Wertes des Steuersignals hin, ausgewählt und/oder ausgeführt wird,
und/oder
(iv) das Kontrollsignal die Datenstruktur und/oder die abgerufenen Konfigurations-Daten aufweist.

5. Verfahren nach einem der vorangehenden Ansprüche, wobei
das Verarbeiten der Konfigurations- bzw. Assoziierungs-Daten aufweist, dass das ausgezeichnete Konfigurations-Profil mit einem weiteren ausgewählten Konfigurations-Profil vergleichen wird, und insbesondere zumindest einige der gemeinsamen und/oder unterschiedlichen allgemeinen Konfigurations-Daten der beiden Konfigurations-Profile ermittelt werden,
und wobei das Kontrollsignal indikativ ist für ein Ergebnis dieses Vergleichs, insbesondere für die Gemeinsamkeiten bzw. Unterschiede zwischen den beiden Konfigurations-Profilen, wobei vorzugsweise ein Unterschied wenigstens **dadurch gekennzeichnet ist, dass** in den beiden Konfigurations-Profilen zumindest teilweise unterschiedliche zweite allgemeine Konfigurations-Daten bestehen und/oder wenn in den beiden Konfigurations-Profilen gleiche zweite allgemeine Konfigurations-Daten mit unterschiedlichen dritten allgemeinen Konfigurations-Daten assoziiert sind,
wobei vorzugsweise dieses Verarbeiten der Daten nach einem Auswerten des Steuersignals und einem Feststellen eines dritten Wertes des Steuersignals erfolgt und/oder mittels eines dritten Moduls (7)
erfolgt das, vorzugsweise auf das Feststellen des dritten Wertes des Steuersignals hin, ausgewählt und/oder ausgeführt wird.

6. Verfahren nach einem der vorangehenden Ansprüche, wobei
der Identifizierer von Seiten einer ersten Quelle empfangen wird;
die spezifischen Konfigurations-Daten von Seiten der ersten und/oder einer zweiten Quelle empfangen werden;
das Steuersignal von Seiten der ersten, der zweiten und/oder einer dritten Quelle empfangen wird; und/oder
der Empfänger identisch mit der ersten, der zweiten und/oder der dritten Quelle ist.

7. Vorrichtung (1), die dazu eingerichtet ist, ein Verfahren nach einem der Ansprüche 1 bis 6 auszuführen, wobei die Vorrichtung vorzugsweise wenigstens einen Server und/oder wenigstens ein Cloud-System aufweist oder darstellt.

8. Verfahren, das mit einem Verfahren nach einem der Ansprüche 1 bis 6 zusammenwirkt, das Verfahren aufweisend:
Senden eines Identifizierers wenigstens eines Konfigurations-Profils;
Empfangen des Kontrollsignals, wobei vorzugsweise das empfangene Kontrollsignal die von dem Konfigurations-Profil aufgewiesene Konfigurations-Daten einer Entität aufweist, und
Konfigurieren der Entität auf Basis des empfangenen Kontrollsignals, insbesondere auf Basis der Konfigurations-Daten, wobei vorzugsweise das Kontrollsignal für ein oder mehrere Konfigurations-Daten indikativ ist, und für diese Konfigurations-Daten eine Konfiguration der Entität erst wenigstens nach einer empfangenen Bestätigung durchgeführt wird.

9. Verfahren nach Anspruch 8, wobei
die Konfigurations-Daten innerhalb einer Datenstruktur strukturiert sind, welche die Beziehungen der einzelnen Konfigurations-Daten zueinander beschreibt oder beschreibbar macht;
das Verfahren ferner aufweist: Senden von Konfigurations-Daten, insbesondere aufweisend die in Anspruch 2 empfangenen und in der Datenbank gespeicherten spezifischen Konfigurations-Daten der Entität.

10. Vorrichtung, die dazu eingerichtet ist, ein Verfahren nach einem der Ansprüche 8 bis 9 auszuführen, wobei die Vorrichtung vorzugsweise ein Teil einer Entität, wie ein Steuermodul, und/oder ein Smartphone aufweist oder darstellt.

11. Computerprogrammprodukt, umfassend Befehle, die bei der Ausführung des Programms durch eine Vorrichtung zur Datenverarbeitung, insbesondere die Vorrichtung nach Anspruch 7 und/oder nach Anspruch 10, diese veranlassen, das Verfahren nach einem der Ansprüche 1-6 und/oder nach einem der Ansprüche 8-9 auszuführen.

12. Signalfolge, repräsentierend Befehle, die, wenn sie auf einer Vorrichtung zur Datenverarbeitung, insbesondere die Vorrichtung nach Anspruch 7 und/oder nach Anspruch 10, ausgeführt werden, die Vorrichtung veranlassen, das Verfahren nach einem der Ansprüche 1-6 und/oder nach einem der Ansprüche 8-9 auszuführen.

## Claims

1. Method for processing configuration data items for a multiplicity of entities, wherein the method comprises:
providing (101, 201, 301) at least one database (3) comprising: a plurality of general configuration data items and a plurality of general association data items, wherein the individual general association data items each describe relationships between two or more general configuration data items and as a result groups of general association data items define different general configuration profiles with general configuration data items each related at least in pairs, wherein different general configuration profiles at least partially have different general configuration data items;
receiving (103, 203, 303) at least one identifier that makes at least one excellent configuration profile identifiable;
processing at least configuration data items and/or association data items in connection with the excellent configuration profile and generating (107, 207, 307) a monitoring signal based on at least one result of the processing; wherein the processing of the configuration and/or association data items comprises receiving specific configuration data items for a specific entity and storing them together with specific association data items in the database (305), wherein the individual specific association data items each describe relationships between one or more general configuration data items of the excellent configuration profile and/or one or more of the received specific configuration data items and thereby define a specific configuration profile comprising at least the excellent configuration profile and the received specific configuration data items related to one or more general configuration data items included in said excellent configuration profile;
wherein the monitoring signal is made available, namely sent, to at least one receiver;
wherein the entities have and/or represent automatic door systems, automatic gate systems, automatic window systems and/or automatic lighting systems.

2. Method according to Claim 1, wherein
(i) the data items are processed after evaluating a control signal and determining a first value of the control signal and/or by means of a first module (9) which is selected and/or executed, preferably in response to the determination of the first value of the control signal, and/or (ii) the monitoring signal has a state of the result of the data processing.

3. Method according to one of the preceding claims, wherein
the general association data items
(i) relate each first general configuration data item in a first general group to at least one, preferably to a plurality of, second general configuration data item(s) in a second general group,
and/or
(ii) relate each second general configuration data item in the second general group to at least one, preferably to a plurality of, third general configuration data item(s) in a third general group,
preferably relate each second general configuration data item in the second general group to a plurality of third general configuration data items in a plurality of third general groups,
in particular relate each second general configuration data item in the second general group to at least one, preferably to a plurality of, first third general configuration data item(s) in a first third general group, to at least one, preferably to a plurality of, second third general configuration data item(s) in a second third general group and/or to at least one, preferably to a plurality of, third third general configuration data item(s) in a third third general group,
and/or
the specific association data items
(i) relate each first specific configuration data item in a first specific group to at least one, preferably to precisely one or to a plurality of, first general configuration data item(s) in the first general group, and/or
(ii) relate each second specific configuration data item in a second specific group to at least one, preferably to precisely one or to a plurality of, second general configuration data item(s) in the second general group, to at least one, preferably to precisely one or to a plurality of, first specific configuration data item(s) in the first specific group and/or to at least one, preferably to precisely one or to a plurality of, third, in particular first third, general configuration data item(s) in the third general group.

4. Method according to one of the preceding claims, wherein
the processing of the configuration and/or association data items comprises retrieving (105, 205) the configuration data items of the excellent configuration profile from the database (3),
wherein preferably
(i) the retrieved configuration data items comprise at least general configuration data items, in particular in the second general group and/or the third general group, in particular the first third, second third and/or third third general group, and/or specific configuration data items, in particular in the second specific group,
(ii) at least the retrieved configuration data items are structured within a data structure that is at least partially based on or represented by the association data items associating the retrieved configuration data items with one another,
(iii) this processing of the data items is carried out after evaluating the control signal and determining a second value of the control signal and/or by means of a second module (5) which is selected and/or executed, preferably in response to the determination of the second value of the control signal,
and/or
(iv) the monitoring signal has the data structure and/or the retrieved configuration data items.

5. Method according to one of the preceding claims, wherein
the processing of the configuration and/or association data items comprises comparing the excellent configuration profile with a further selected configuration profile, and in particular determining at least some of the common and/or different general configuration data items of the two configuration profiles,
and wherein the monitoring signal is indicative of a result of this comparison, in particular of the similarities or differences between the two configuration profiles, wherein preferably a difference is at least **characterized in that** there are at least partially different second general configuration data items in the two configuration profiles and/or if the same second general configuration data items are associated with different third general configuration data items in the two configuration profiles,
wherein preferably this processing of the data items is carried out after evaluating the control signal and determining a third value of the control signal and/or by means of a third module (7) which is selected and/or executed, preferably in response to the determination of the third value of the control signal.

6. Method according to one of the preceding claims, wherein
the identifier is received from a first source;
the specific configuration data items are received from the first and/or a second source;
the control signal is received from the first, second and/or a third source;
and/or
the receiver is identical to the first, second and/or third source.

7. Device (1) which is configured to carry out a method according to one of Claims 1 to 6, wherein the device preferably comprises or represents at least one server and/or at least one cloud system.

8. Method which cooperates with a method according to one of Claims 1 to 6, the method comprising:
sending an identifier of at least one configuration profile;
receiving the monitoring signal, wherein preferably the received monitoring signal comprises the configuration data items for an entity that are included in the configuration profile, and
configuring the entity on the basis of the received monitoring signal, in particular on the basis of the configuration data items, wherein the monitoring signal is preferably indicative of one or more configuration data items, and, for these configuration data items, the entity is configured only at least after a received confirmation.

9. Method according to Claim 8, wherein
the configuration data items are structured within a data structure that describes or makes it possible to describe the relationships between the individual configuration data items;
the method also comprises: sending configuration data items, in particular comprising the specific configuration data items for the entity that are received in claim 2 and stored in the database.

10. Device which is configured to carry out a method according to one of Claims 8 to 9, wherein the device preferably has or represents a part of an entity, such as a control module, and/or a smartphone.

11. Computer program product comprising instructions which, when the program is executed by a data processing device, in particular the device according to Claim 7 and/or according to Claim 10, cause this device to carry out the method according to one of Claims 1-6 and/or according to one of Claims 8-9.

12. Signal sequence representing instructions which, when executed on a data processing device, in particular the device according to Claim 7 and/or according to Claim 10, cause the device to carry out the method according to one of Claims 1-6 and/or according to one of Claims 8-9.

## Revendications

1. Procédé de traitement de données de configuration d'une pluralité d'entités, le procédé comprenant :
la mise à disposition (101, 201, 301) d'au moins une base de données, (3) qui comprend : une pluralité de données de configuration générales et une pluralité de données d'association générales, les données d'association générales individuelles décrivant respectivement des relations entre deux données de configuration générales ou plus, et des groupes de données d'association générales définissant par conséquent différents profils de configuration généraux comprenant des données de configuration générales respectivement associées au moins par paires, différents profils de configuration généraux comprenant au moins partiellement des données de configuration générales différentes ;
la réception (103, 203, 303) d'au moins un identificateur qui rend identifiable au moins un profil de configuration approprié ;
le traitement d'au moins des données de configuration et/ou des données d'association en relation avec le profil de configuration approprié, et la génération (107, 207, 307) d'un signal de commande sur la base d'au moins un résultat du traitement ; le traitement des données de configuration ou des données d'association comprenant le fait que des données de configuration spécifiques d'une entité spécifique sont reçues et stockées (305) conjointement avec des données d'association spécifiques dans la base de données, les données d'association spécifiques individuelles décrivant respectivement des relations entre une ou plusieurs données de configuration générales du profil de configuration approprié et/ou une ou plusieurs des données de configuration spécifiques reçues, et définissant ainsi un profil de configuration spécifique, qui présente au moins le profil de configuration approprié et les données de configuration spécifiques reçues liées à une ou plusieurs données de configuration générales comprises dans celui-ci ;
le signal de commande étant fourni à au moins un récepteur, c'est-à-dire transmis à celui-ci ;
les entités comprenant et/ou représentant des installations de portes automatiques, des installations de portails automatiques, des installations de fenêtres automatiques et/ou des installations d'éclairage automatiques.

2. Procédé selon la revendication 1, dans lequel (i) le traitement des données est effectué après une évaluation d'un signal de commande et l'établissement d'une première valeur du signal de commande et/ou au moyen d'un premier module (9), qui est de préférence sélectionné et/ou exécuté en réponse à la détermination de la première valeur du signal de commande, et/ou (ii) le signal de commande présente un état du résultat du traitement de données.

3. Procédé selon l'une quelconque des revendications précédentes, dans lequel
par le biais des données d'association générales,
(i) chaque première donnée de configuration générale d'un premier groupe général est mise en relation avec au moins une, de préférence avec de multiples deuxièmes données de configuration générales d'un deuxième groupe général,
et/ou
(ii) chaque deuxième donnée de configuration générale du deuxième groupe général est mise en relation avec au moins une, de préférence avec de multiples troisièmes données de configuration générales d'un troisième groupe général,
de préférence, chaque deuxième donnée de configuration générale du deuxième groupe général est mise en relation avec de multiples troisièmes données de configuration générales de multiples troisièmes groupes généraux,
en particulier, chaque deuxième donnée de configuration générale du deuxième groupe général est mise en relation avec au moins une, de préférence avec de multiples premières troisièmes données de configuration générales d'un premier troisième groupe général, avec au moins une, de préférence avec de multiples deuxièmes troisièmes données de configuration générales d'un deuxième troisième groupe général et/ou avec au moins une, de préférence avec de multiples troisièmes troisièmes données de configuration générales d'un troisième troisième groupe général,
et/ou
par l'intermédiaire des données d'association spécifiques,
(i) chaque première donnée de configuration spécifique d'un premier groupe spécifique est mise en relation avec au moins une, de préférence avec exactement une ou avec de multiples premières données de configuration générales du premier groupe général,
et/ou
(ii) chaque deuxième donnée de configuration spécifique d'un deuxième groupe spécifique est mise en relation avec au moins une, de préférence avec exactement une ou avec de multiples deuxièmes données de configuration générales du deuxième groupe général, avec au moins une, de préférence avec exactement une ou avec de multiples premières données de configuration spécifiques du premier groupe spécifique et/ou avec au moins une, de préférence avec exactement une ou avec de multiples troisièmes, en particulier avec des premières troisièmes données de configuration générales du troisième groupe général.

4. Procédé selon l'une quelconque des revendications précédentes, dans lequel
le traitement des données de configuration ou d'association comprend le fait que les données de configuration du profil de configuration approprié sont extraites (105, 205) de la base de données (3),
dans lequel, de préférence,
(i) les données de configuration extraites comprennent au moins des données de configuration générales, en particulier du deuxième groupe général et/ou du troisième groupe général, en particulier du premier troisième, du deuxième troisième et/ou du troisième troisième groupe général, et/ou des données de configuration spécifiques, en particulier du deuxième groupe spécifique,
(ii) au moins les données de configuration extraites sont structurées à l'intérieur d'une structure de données fondée ou représentée au moins en partie sur les données d'association qui associent les unes aux autres les données de configuration extraites,
(iii) ce traitement des données est effectué après une évaluation du signal de commande et l'établissement d'une deuxième valeur du signal de commande et/ou au moyen d'un deuxième module (5) qui est sélectionné et/ou exécuté de préférence en réponse à l'établissement de la deuxième valeur du signal de commande,
et/ou
(iv) le signal de commande comprend la structure de données et/ou les données de configuration extraites.

5. Procédé selon l'une quelconque des revendications précédentes, dans lequel
le traitement des données de configuration ou d'association consiste à comparer le profil de configuration approprié à un autre profil de configuration sélectionné, et en particulier à déterminer au moins certaines des données de configuration générales communes et/ou différentes des deux profils de configuration,
et dans lequel le signal de commande est indicatif d'un résultat de cette comparaison, en particulier pour les aspects communs ou les différences entre les deux profils de configuration, une différence étant de préférence caractérisée au moins par le fait qu'il existe des deuxièmes données de configuration générales au moins partiellement différentes dans les deux profils de configuration et/ou lorsque des deuxièmes données de configuration générales identiques sont associées à des troisièmes données de configuration générales différentes dans les deux profils de configuration,
ce traitement des données étant de préférence effectué après une évaluation du signal de commande et l'établissement d'une troisième valeur du signal de commande et/ou au moyen d'un troisième module (7), qui est de préférence sélectionné et/ou exécuté en réponse à l'établissement de la troisième valeur du signal de commande.

6. Procédé selon l'une quelconque des revendications précédentes, dans lequel
l'identifiant est reçu en provenance de pages d'une première source ;
les données de configuration spécifiques sont reçues en provenance de pages de la première et/ou d'une deuxième source ;
le signal de commande est reçu en provenance de pages de la première, de la deuxième et/ou de la troisième source ;
et/ou
le récepteur est identique à la première, à la deuxième et/ou à la troisième source.

7. Dispositif (1) qui est conçu pour la mise en œuvre d'un procédé selon l'une quelconque des revendications 1 à 6, le dispositif présentant ou représentant de préférence au moins un serveur et/ou au moins un système en nuage.

8. Procédé qui interagit avec un procédé selon l'une quelconque des revendications 1 à 6, le procédé comprenant :
l'envoi d'un identifiant d'au moins un profil de configuration ;
la réception du signal de commande, le signal de commande reçu comprenant de préférence les données de configuration d'une entité identifiée par le profil de configuration, et
la configuration de l'entité sur la base du signal de commande reçu, en particulier sur la base des données de configuration, le signal de commande indiquant de préférence une ou de multiples données de configuration et, pour ces données de configuration, une configuration de l'entité n'étant effectuée qu'après réception d'une confirmation.

9. Procédé selon la revendication 8, dans lequel
les données de configuration sont structurées au sein d'une structure de données qui décrit ou permet de décrire les relations entre les données de configuration individuelles ;
le procédé comprenant en outre : l'envoi de données de configuration, comprenant en particulier les données de configuration spécifiques de l'entité reçues selon la revendication 2 et stockées dans la base de données.

10. Dispositif configuré pour mettre en œuvre un procédé selon l'une quelconque des revendications 8 à 9, le dispositif présentant ou représentant de préférence une partie d'une entité, telle qu'un module de commande, et/ou un smartphone.

11. Produit de programme d'ordinateur comprenant des instructions qui, lorsque le programme est exécuté par un dispositif de traitement de données, en particulier le dispositif selon la revendication 7 et/ou selon la revendication 10, amènent ce dernier à mettre en œuvre le procédé selon l'une quelconque des revendications 1-6 et/ou selon l'une quelconque des revendications 8-9.

12. Séquence de signaux représentant des instructions qui, lorsqu'elles sont exécutées sur un dispositif de traitement de données, en particulier le dispositif selon la revendication 7 et/ou selon la revendication 10, amènent le dispositif à mettre en œuvre le procédé selon l'une quelconque des revendications 1-6 et/ou selon l'une quelconque des revendications 8-9.
